# EUROPÄISCHE PATENTSCHRIFT

(11) **EP 3 117 141 B1**
(45) Veröffentlichungstag und Bekanntmachung des Hinweises auf die Patenterteilung: **08.05.2019**
(21) Anmeldenummer: 15709892.2
(22) Anmeldetag: 11.03.2015
(51) Int. Cl.: F21S 41/143, B60Q 1/00, B60Q 1/18, B60Q 1/28, B60Q 1/48, F21S 41/148, F21S 41/24, F21S 41/29

(54) **KRAFTFAHRZEUG UND KRAFTFAHRZEUGSCHEINWERFER MIT VORSATZGEHÄUSE**
MOTOR VEHICLE AND MOTOR VEHICLE HEADLAMP COMPRISING A FRONT HOUSING
VÉHICULE AUTOMOBILE ET PHARE DE VÉHICULE AUTOMOBILE COMPRENANT UN BOÎTIER D'ADAPTATEUR

(30) Priorität: 12.03.2014 DE 102014204515
(43) Veröffentlichungstag der Anmeldung: 18.01.2017
(73) Patentinhaber: Volkswagen Aktiengesellschaft, 38440 Wolfsburg (DE)
(72) Erfinder: THIEL, Alexander, 38118 Braunschweig (DE); DORDEL, Eduard, 38547 Calberlah (DE)
(86) Internationale Anmeldenummer: PCT/EP2015/055009
(87) Internationale Veröffentlichungsnummer: WO 2015/135962

(56) Entgegenhaltungen:
- EP-A1- 1 835 224
- EP-A2- 2 071 228
- WO-A2-2013/075792
- DE-A1- 10 036 323
- DE-A1- 10 208 140
- DE-A1- 19 933 713
- DE-A1- 19 943 255
- DE-A1-102006 007 134
- DE-A1-102006 017 780
- FR-A1- 2 979 414
- JP-A- 2011 198 536
- US-A1- 2012 069 592
- US-A1- 2013 182 450
- US-A1- 2013 343 074

## Beschreibung

Die Erfindung betrifft einen Kraftfahrzeugscheinwerfer, welcher ein Gehäuse umfasst, in welchem mindestens eine Hauptlichtquelle angeordnet ist und der mindestens ein weiteres Leuchtmittel sowie einen Kühlkörper zur Kühlung des mindestens einen Leuchtmittels aufweist. Ferner umfasst der Kraftfahrzeugscheinwerfer eine zumindest teilweise transparente Außenlichtscheibe, welche das Gehäuse zu der äußeren Umgebung des Kraftfahrzeugscheinwerfers hin abschließt und eine dem Inneren des Gehäuses zugewandte Innenseite und eine der äußeren Umgebung zugewandte Außenseite aufweist, sowie ein Vorsatzgehäuse, welches vor der Außenseite der Außenlichtscheibe angeordnet ist. Ferner betrifft die Erfindung ein Kraftfahrzeug mit einem erfindungsgemäßen Kraftfahrzeugscheinwerfer.

Ein derartiger Kraftfahrzeugscheinwerfer ist aus der FR 2 979 414 A1 bekannt. Ferner beschreiben die DE 10 2006 007 134 A1 und die US 2013/182450 A1 je eine Beleuchtungseinrichtung für Fahrzeuge.

Aus der EP 1 835 224 A1 ist eine Kraftfahrzeugleuchte bekannt, welche mehrere in einem Gehäuse angeordnete Hauptlichtquellen sowie mehrere Reflexionselemente aufweist. Das Gehäuse ist durch eine Außenlichtscheibe, welche auch als Abschlussscheibe oder als Abdeckscheibe bezeichnet wird, abgeschlossen. Ein Lichtleitelement ist innerhalb des Gehäuses zwischen den Hauptlichtquellen und der Außenlichtscheibe angeordnet.

Ferner ist aus der US 2012/0069592 A1 ein Kraftfahrzeugscheinwerfer mit zwei in einem Gehäuse angeordneten Hauptlichtquellen bekannt, bei welchem Lichtleiter zwischen der Außenlichtscheibe und dem Gehäuse des Kraftfahrzeugscheinwerfers angeordnet sind. Die Enden der Lichtleiter sind in eine hintere Ecke des Gehäuses des Kraftfahrzeugscheinwerfers geführt und dort an ein auf einem Kühlkörper befindliches Leuchtmittel angekoppelt.

An derartigen Kraftfahrzeugscheinwerfern ist nachteilig, dass die Sichtbarkeit der in dem Gehäuse hinter der Außenlichtscheibe angeordneten Lichtleitelemente durch das Gehäuse beziehungsweise die Außenlichtscheibe selbst eingeschränkt wird.

Des Weiteren offenbart die WO 2013/075792 A2 eine Beleuchtungsvorrichtung für ein Kraftfahrzeug, welche einen Kraftfahrzeugscheinwerfer mit zwei Hauptlichtquellen umfasst, die in einem Gehäuse angeordnet sind, welches mit einer Außenlichtscheibe abgeschlossen wird. Auf der Außenlichtscheibe ist ein Trägerelement angeordnet, welches zur Aufnahme von Leuchtmitteln ausgebildet ist.

Der Erfindung liegt die Aufgabe zugrunde, einen Kraftfahrzeugscheinwerfer zu realisieren, welcher die Bereitstellung von Licht sowie die Kühlung der Lichtbereitstellung kompakt und praktisch innerhalb des Scheinwerfergehäuses oder auch als kompakte modulare Baugruppe bei einer gleichzeitigen Erhöhung der Sichtbarkeit einzelner ausgewählter Lichtfunktionen ermöglicht, sowie ein Kraftfahrzeug mit einem entsprechenden Kraftfahrzeugscheinwerfer bereitzustellen.

Erfindungsgemäß wird ein Kraftfahrzeugscheinwerfer zur Verfügung gestellt. Der erfindungsgemäße Kraftfahrzeugscheinwerfer umfasst ein Gehäuse, in welchem mindestens eine Hauptlichtquelle angeordnet ist sowie mindestens ein weiteres Leuchtmittel. Ferner umfasst der Kraftfahrzeugscheinwerfer einen Kühlkörper zur Kühlung des Leuchtmittels sowie eine zumindest teilweise transparente Außenlichtscheibe, welche das Gehäuse zu der äußeren Umgebung des Kraftfahrzeugscheinwerfers hin abschließt und eine dem Inneren des Gehäuses zugewandte Innenseite und eine der äußeren Umgebung zugewandte Außenseite aufweist. Des Weiteren umfasst der Kraftfahrzeugscheinwerfer ein Vorsatzgehäuse, welches vor der Außenseite der Außenlichtscheibe angeordnet ist. Ferner ist in oder an dem Vorsatzgehäuse ein lichtleitendes Element angeordnet, welches den Innenraum des Vorsatzgehäuses zumindest teilweise ausfüllt oder zumindest einen Teil einer Wand des Vorsatzgehäuses bildet, und welches dazu ausgebildet ist, mittels des mindestens einen Leuchtmittels eingestrahltes Licht zu leiten. Erfindungsgemäß ist das Vorsatzgehäuse mit dem Gehäuse des Kraftfahrzeugscheinwerfers durch ein oder mehrere Befestigungselemente zerstörungsfrei lösbar verbunden.

Der Vorteil eines derartig ausgeführten Kraftfahrzeugscheinwerfers ist eine verbesserte Wartungsfreundlichkeit und die erhöhte Sichtbarkeit des vor der Außenseite der Außenlichtscheibe des Kraftfahrzeugscheinwerfers angeordneten lichtleitenden Elementes.

Bevorzugt ist das lichtleitende Element als länglicher Lichtleiter ausgeführt, welcher den Innenraum des Vorsatzgehäuses zumindest teilweise ausfüllt. Bevorzugt erstreckt sich der längliche Lichtleiter im Wesentlichen orthogonal zur Abstrahlrichtung der Hauptlichtquelle innerhalb des Vorsatzgehäuses entlang der Außenseite der Außenlichtscheibe des Kraftfahrzeugscheinwerfers. Derartige Lichtleiter sind kostengünstig und ermöglichen eine optisch homogene Lichtabstrahlung.

Vorzugsweise ist eine Kollimator-Optik vor dem mindestens einen Leuchtmittel angeordnet, welche das von dem mindestens einen Leuchtmittel emittierte Licht zu bündeln vermag. Kollimator-Optiken ermöglichen eine Zentrierung des mittels des Leuchtmittels emittierten Lichtes auf einen durch die Geometrie der Kollimator-Optik vorbestimmten Punkt. Durch die Verwendung einer solchen Kollimator-Optik, also eines solchen Kollimators, erhöht sich die Effizienz der Leuchtvorrichtung signifikant.

Vorzugsweise ist die Kollimator-Optik vor dem mindestens einen Leuchtmittel zumindest teilweise innerhalb des Gehäuses angeordnet. Weiterhin bevorzugt sind das mindestens eine weitere Leuchtmittel und der Kühlkörper in dem Gehäuse angeordnet. Dies bietet den Vorteil, dass die Beleuchtung, die Kühlung der Beleuchtung sowie die Kontaktierung des für die Beleuchtung benötigten Leuchtmittels und die Kollimator-Optik sicher und kompakt innerhalb des Gehäuses des Kraftfahrzeugscheinwerfers erfolgt. Somit muss das zur Lichteinstrahlung in das lichtleitende Element verwandte Leuchtmittel nicht außerhalb des Gehäuses des Kraftfahrzeugscheinwerfers angeordnet, gekühlt oder an eine Stromversorgung angebunden werden, was den Kraftfahrzeugscheinwerfer an sich robuster und stabiler macht.

Bevorzugt ist zumindest ein Bereich der der Außenlichtscheibe zugewandten Wand des Vorsatzgehäuses als Lichtscheibe ausgeführt, durch welche das mindestens eine weitere Leuchtmittel Licht in das Vorsatzgehäuse einzustrahlen vermag und hinter welchem innenseitig eine Umlenkoptik innerhalb des Vorsatzgehäuses angeordnet ist, mittels welcher eingestrahltes Licht in den länglichen Lichtleiter umgelenkt wird. Auf diesem Weg kann vorteilhaft innerhalb des Gehäuses des Kraftfahrzeugscheinwerfers generiertes Licht in das im Vorsatzgehäuse befindliche beziehungsweise angeordnete lichtleitende Element eingekoppelt werden.

In einer bevorzugten Ausführungsform sind die Lichtscheibe, die Umlenkoptik und/oder der längliche Lichtleiter als ein zusammenhängendes, gemeinsames Bauteil ausgeführt. Bevorzugt sind die Lichtscheibe, die Umlenkoptik und/oder der längliche Lichtleiter als zusammenhängendes Bauteil gespritzt, also mittels eines Spritzgussverfahrens hergestellt. Mit anderen Worten ausgedrückt ist die Umlenkoptik bevorzugt aus der Lichtscheibe herausgebildet und/oder ist der Lichtleiter mit der Umlenkoptik verbunden oder aus dieser herausgebildet. Ferner bevorzugt weist die Umlenkoptik in dem Bereich, in welchem sie mit der Lichtscheibe verbunden ist, eine Einkoppelseite auf, während die Umlenkoptik in dem Bereich, in welchem sie mit dem Lichtleiter verbunden ist, eine Auskoppelseite aufweist. Bei einer derartigen Ausführung kann die Kombination aus Lichtscheibe, Umlenkoptik und Lichtleiter schnell, einfach, kostengünstig und robust hergestellt werden.

Bevorzugt weist die Umlenkoptik eine Einkoppelseite und eine Auskoppelseite auf, wobei die Einkoppelseite aus einem Teil der Außenlichtscheibe gebildet ist und die Umlenkoptik durch eine in einer Wand des Vorsatzgehäuses gebildeten Öffnung hindurch in das Vorsatzgehäuse hineinragt, wobei zumindest ein Teil der Auskoppelseite der Umlenkoptik innerhalb des Vorsatzgehäuses und vor einer Lichteinkoppelstelle des länglichen Lichtleiters angeordnet ist. Mit anderen Worten ausgedrückt ist die Umlenkoptik bevorzugt aus der Außenlichtscheibe herausgebildet und ragt durch die Öffnung im Vorsatzgehäuse in dieses hinein. Bei einer derartigen Ausführungsform stellt also der Bereich der Außenlichtscheibe, an welchem die Umlenkoptik angeordnet beziehungsweise aus welchem die Umlenkoptik herausgebildet ist, die Einkoppelseite der Umlenkoptik dar. Des Weiteren bevorzugt sind die Außenlichtscheibe und die Umlenkoptik als ein zusammenhängendes Bauteil gespritzt, also mittels eines Spritzgussverfahrens als ein gemeinsames, zusammenhängendes Bauteil gefertigt. Ferner bevorzugt ist die Öffnung des Vorsatzgehäuses, durch welche die Umlenkoptik in das Vorsatzgehäuse hineinragt, mittels eines Dichtringes abgedichtet. Bevorzugt handelt es sich bei dem Dichtring um einen O-Dichtring. Bei einer derartigen Ausführungsform reduziert sich die Anzahl der für die Montage des Kraftfahrzeugscheinwerfers benötigten Einzelteile, was die Fertigung sowie die Montage des Kraftfahrzeugscheinwerfers vereinfacht und die Kosten für selbige senkt.

Vorzugsweise weist die Kollimator-Optik eine Auskoppelfläche auf, welche zumindest teilweise mit der Einkoppelseite der Umlenkoptik zusammenfällt, und sind die Kollimator-Optik, die Außenlichtscheibe und die Umlenkoptik als ein gemeinsames, zusammenhängendes Bauteil ausgebildet. Mit anderen Worten ausgedrückt überlagert sich zumindest ein Teil der Auskoppelfläche der Kollimator-Optik bevorzugt mit einem Teil der Einkoppelseite der Umlenkoptik. Bevorzugt sind die Kollimator-Optik, die Außenlichtscheibe und die Umlenkoptik als ein zusammenhängendes Bauteil gespritzt, also mittels eines Spritzgussverfahrens als ein gemeinsames, zusammenhängendes Bauteil gefertigt, wobei die Außenlichtscheibe in dem Bereich, in welchem sie mit der Kollimator-Optik und der Umlenkoptik verbunden ist, die Auskoppelfläche der Kollimator-Optik und die Einkoppelseite der Umlenkoptik bildet. Dadurch wird der Montageaufwand des Kraftfahrzeugscheinwerfers abermals signifikant reduziert, was wiederum die Kosten für Herstellung und Zusammenbau desselben senkt.

Bevorzugt weist die Außenlichtscheibe einen sich in Richtung der äußeren Umgebung erstreckenden Vorsprung auf, welcher durch eine in einer Wand des Vorsatzgehäuses gebildete Öffnung hindurch in das Vorsatzgehäuse hineinragt. Bevorzugt ist das Leuchtmittel samt der vor diesem angeordneten Kollimator-Optik in dem Vorsprung angeordnet und vermag das Licht in den länglichen Lichtleiter einzukoppeln. Bevorzugt ist der Vorsprung kammerförmig ausgebildet und weist einen topfförmigen Querschnitt auf. Bevorzugt ist der Vorsprung an einem Rand der Außenlichtscheibe angeordnet und rechteckig ausgebildet. Bevorzugt verläuft mindestens eine Wand des Vorsprungs parallel zu einer Einkoppelseite des länglichen Lichtleiters. Bevorzugt ist der Vorsprung passgenau in das Vorsatzgehäuse einführbar und/oder über eine Passung mit dem Vorsatzgehäuse verbindbar. Bevorzugt entspricht die Hauptabstrahlrichtung des Leuchtmittels der Ausbreitungsrichtung des länglichen Lichtleiters. Bevorzugt ist der Kühlkörper neben dem Leuchtmittel innerhalb des Gehäuses angeordnet. In einer derartigen Ausführungsform kann auf eine Umlenkoptik verzichtet werden, wodurch sich der Wirkungsgrad der Leuchtvorrichtung insgesamt erhöht.

Vorzugsweise weist die Kollimator-Optik eine Auskoppelfläche auf und ist einteilig mit der Außenlichtscheibe gefertigt, wobei die Auskoppelfläche der Kollimator-Optik durch einen Teil der Außenlichtscheibe gebildet ist oder die Auskoppelfläche der Kollimator-Optik außerhalb des Gehäuses zwischen der Außenseite der Außenlichtscheibe und einer Wand des Vorsatzgehäuses angeordnet ist. Bei einer derartigen Ausführung kann die Lichtauskopplung aus der Kollimator-Optik effizienter erfolgen, da die Auskoppelfläche der Kollimator-Optik entweder durch einen Abschnitt der Außenlichtscheibe selbst gebildet ist oder hinter der Außenlichtscheibe, also nicht mehr innerhalb des Gehäuses, liegt, was den Lichtverlust reduziert.

In einer bevorzugten Weiterentwicklung dieser Ausführungsform bildet die Außenlichtscheibe eine Wand des Vorsatzgehäuses. In einer derartigen Ausführungsform ist der Kraftfahrzeugscheinwerfer besonders kompakt ausgeführt. Ferner bevorzugt ist der Kontaktbereich, in welchem das Vorsatzgehäuse mit der Außenlichtscheibe in Kontakt steht, mittels eines Dichtringes abgedichtet. Bevorzugt handelt es sich bei dem Dichtring um einen O-Dichtring.

Vorzugsweise ist die der Außenlichtscheibe gegenüberliegende Wand des Vorsatzgehäuses zumindest teilweise durch eine weitere Lichtscheibe gebildet, welche mindestens eine Struktur zur Lichteinkopplung und/oder eine Struktur zur Lichtauskopplung aufweist. Bei einer derartigen Ausführung ist das lichtleitende Element also durch einen Teil einer Lichtscheibe gebildet, welche mindestens eine Struktur zur Lichteinkopplung und/oder eine Struktur zur Lichtauskopplung aufweist und einen Teil der der Außenlichtscheibe gegenüberliegenden Wand des Vorsatzgehäuses bildet. Durch die mindestens eine Struktur zur Lichteinkopplung und/oder die mindestens eine Struktur zur Lichtauskopplung wird das mittels des Leuchtmittels eingestrahlte Licht wesentlich, also über das durch das Phänomen der Lichtbrechung im Material gegebene Maß hinausgehend, in seinem Strahlengang abgelenkt beziehungsweise verändert. Dadurch kann eine vorbestimmte Lichtverteilung auf einfachem Wege realisiert werden, was beispielsweise die Realisierung ausgewählter Lichtfunktionen ermöglicht.

Bevorzugt weist die Außenlichtscheibe zumindest im Bereich der Auskoppelfläche der Kollimator-Optik mindestens eine Struktur zur Lichtauskopplung auf, wobei die der Außenlichtscheibe gegenüberliegende Wand des Vorsatzgehäuses zumindest teilweise durch eine weitere Lichtscheibe gebildet ist. In einer derartigen Ausführungsform bildet das lichtleitende Element also einen Teil einer Wand des Vorsatzgehäuses. Ferner bevorzugt weist die Auskoppelfläche der Kollimator-Optik mindestens eine Struktur zur Lichtauskopplung auf. In einer solchen Ausführung muss das Licht nicht umgelenkt werden, sondern kann auf direktem Wege aus der der Außenlichtscheibe gegenüberliegenden Wand des Vorsatzgehäuses ausgeworfen werden. Dadurch erhöht sich die Effizienz des Kraftfahrzeugscheinwerfers.

Bevorzugt handelt es sich bei der der Außenlichtscheibe gegenüberliegenden Wand des Vorsatzgehäuses um diejenige Wand des Vorsatzgehäuses, welche das Innere des Vorsatzgehäuses von der äußeren Umgebung des Kraftfahrzeugscheinwerfers trennt beziehungsweise isoliert.

In einer bevorzugten Ausführungsform ist die Umlenkeinheit als Prisma und/oder als eine Spiegelanordnung ausgeführt. Prismen und Spiegelanordnungen eignen sich besonders gut für die Umlenkung von Licht, da selbige bei der Verwendung von Prismen oder Spiegelanordnungen effizienter erfolgt als beispielsweise bei der Verwendung einer zu diesem Zweck geschaffenen Lichtleitervorrichtung.

In einer weiteren bevorzugten Ausführungsform sind das mindestens eine weitere Leuchtmittel und der Kühlkörper in oder an dem Vorsatzgehäuse angeordnet. Die Beleuchtung, die Kühlung der Beleuchtung sowie die Kontaktierung des für die Beleuchtung benötigten Leuchtmittels an dem Vorsatzgehäuse bilden so vorteilhaft eine kompakte Baugruppe. Beispielsweise wird der Aufwand bei Wartungsarbeiten und in Ersatzteilfällen dadurch reduziert. Es ergeben sich weitere Vorteile hinsichtlich der Kosten.

Besonders bevorzugt sind das mindestens eine weitere Leuchtmittel und der Kühlkörper an einer der Außenlichtscheibe zugewandten Rückseite des Vorsatzgehäuses angeordnet. Mit anderen Worten erstrecken sich das Leuchtmittel und der Kühlkörper von der Rückseite des Vorsatzgehäuses, welche vor der Außenlichtscheibe angeordnet ist, in Richtung des Gehäuses des Kraftfahrzeugscheinwerfers. Die beschriebene Ausführungsform bietet den Vorteil, dass das Leuchtmittel und der Kühlkörper geschützt, platzsparend und von außen nicht sichtbar angeordnet sind. Eine Kontaktierung wird so ebenfalls erleichtert, da benötigte Kontaktelemente, rein beispielhaft, zwischen dem Gehäuse und anderen umliegenden, beispielsweise Karosserieteilen, hindurch verlegt sein können oder die Kontaktelemente in das Gehäuse hinein verlegt sein können. Das Leuchtmittel und der Kühlkörper können beispielsweise auch in eine Formausnehmung des Gehäuses hineinragen.

Bevorzugt ist die Kollimator-Optik zumindest teilweise innerhalb des Vorsatzgehäuses angeordnet. Die Kollimator-Optik ist dadurch vorteilhaft geschützt und kompakt angeordnet. Die Kollimator-Optik kann so auch in räumlicher Nähe zu dem Leuchtmittel angeordnet sein, wenn dieses in oder an dem Vorsatzgehäuse angeordnet ist, wodurch auch eine Montage des Leuchtmittels und des Kühlkörpers in oder an dem Vorsatzgehäuse erleichtert wird.

Bevorzugt erstrecken sich das mindestens eine weitere Leuchtmittel und/oder der Kühlkörper zumindest teilweise in das Vorsatzgehäuse hinein. Dies bietet den Vorteil, dass die Komponenten geschützt und kompakt an beziehungsweise in dem Vorsatzgehäuse angeordnet sind.

Bevorzugt erstreckt sich das Vorsatzgehäuse spangenförmig über zumindest einen Teil der Außenlichtscheibe. Mit anderen Worten ausgedrückt erstreckt sich das Vorsatzgehäuse bevorzugt linienförmig, also flügelartig beziehungsweise lamellenförmig entlang zumindest eines Teils der Außenlichtscheibe. Das Vorsatzgehäuse weist besonders bevorzugt eine flügelförmige Geometrie auf, welche zwei zueinander angewinkelt ausgerichtete Vorsatzgehäuse-Abschnitte umfasst. In einer derartigen Ausführungsform wird durch das Vorsatzgehäuse lediglich ein geringer Teil des mittels der Hauptlichtquelle emittierbaren Lichtes ausgeblendet.

Bevorzugt ist die Außenlichtscheibe an dem Gehäuse stoffschlüssig befestigt. Besonders bevorzugt ist die Außenlichtscheibe an dem Gehäuse angeschweißt oder angeklebt. Dies bietet besondere Vorteile hinsichtlich der Kosten, der Gestaltungsflexibilität, der Sicherheit und der Dichtigkeit der Verbindung.

Die Außenlichtscheibe ist bevorzugt über Formelemente positioniert. Als Formelemente können rein beispielhaft Nuten oder andere Formausnehmungen in dem Gehäuse vorgesehen sein, in denen die Außenlichtscheibe positionierbar ist. Der Fügeprozess und das Fügeergebnis werden dadurch signifikant verbessert.

Die Außenlichtscheibe kann auch lösbar an dem Gehäuse über die Formelemente positioniert sein. In diesem Fall kann die Außenlichtscheibe durch Anordnung des Vorsatzgehäuses vor dem Gehäuse an diesem in seiner Position gesichert sein. Somit kann die Anzahl benötigter Einzelteile für die Montage vorteilhaft reduziert werden. Das Vorsatzgehäuse und die Außenlichtscheibe können auch als zusammenhängendes Teil ausgebildet sein.

Das Folgende gilt, sofern im Einzelfall nicht anders beschrieben, sowohl für Ausführungsformen, in denen die Außenlichtscheibe mit dem Gehäuse stoffschlüssig verbunden ist, als auch für jene, in denen die Außenlichtscheibe durch das Vorsatzgehäuse an dem Gehäuse gehalten wird oder mit dem Vorsatzgehäuse einteilig ausgeführt ist.

Bevorzugt ist das Vorsatzgehäuse mit dem Gehäuse des Kraftfahrzeugscheinwerfers unter Ausnutzung eines kraft- und/oder formschlüssigen Wirkprinzips zerstörungsfrei lösbar durch ein oder mehrere Befestigungselemente verbunden. Mit anderen Worten, der Kraftfahrzeugscheinwerfer weist Befestigungselemente auf, die ausgebildet sind, durch Kraft- und/oder Formschluss eine auf Dauer angelegte Verbindung zwischen dem Vorsatzgehäuse und dem Gehäuse des Kraftfahrzeugscheinwerfers herzustellen, die bei Bedarf zerstörungsfrei lösbar ist. Das Vorsatzgehäuse ist also über wenigstens ein Befestigungselement vor der Außenseite der Außenlichtscheibe beziehungsweise dem Gehäuses des Kraftfahrzeugscheinwerfers an dem Gehäuse fixierbar. Dies bietet den Vorteil, dass das Vorsatzgehäuse schnell und einfach montierbar beziehungsweise demontierbar ist und die Wartungsfreundlichkeit erhöht wird.

Sind das Vorsatzgehäuse und die Außenlichtscheibe als zusammenhängendes Bauteil ausgeführt, so kann dieses zusammenhängende Bauteil auch wie oben beschrieben durch ein stoffschlüssiges Verbindungsprinzip an dem Gehäuse befestigt werden.

Bevorzugt ist das Vorsatzgehäuse derart an dem Gehäuse des Kraftfahrzeugscheinwerfers fixierbar, dass es relativ zu dem Gehäuse eine definierte Position und Orientierung aufweist. Hierzu kann in wenigstens einem Teilbereich des wenigstens einen Befestigungselements wenigstens eine Passung vorgesehen sein. Hieraus ergibt sich vorteilhaft eine genau definierte relative Lage des Gehäuses und des Vorsatzgehäuses zueinander. Dies bietet insbesondere Vorteile hinsichtlich der Realisierung der Lichtfunktionen sowie des äußeren Erscheinungsbildes. Es können auch zusätzliche Positionierungselemente oder entsprechende Aufnahmeflächen an dem Gehäuse des Kraftfahrzeugscheinwerfers beziehungsweise dem Vorsatzgehäuse selbst vorgesehen sein.

Bevorzugt sind ein oder mehrere Befestigungselemente aus dem Vorsatzgehäuse und/oder dem Gehäuse des Kraftfahrzeugscheinwerfers herausgebildet oder anders ausgedrückt, in das Vorsatzgehäuse und/oder das Gehäuse zu (jeweils) einem Bauteil integriert. Die Anzahl an Einzelteilen wird dadurch vorteilhaft reduziert, so dass die Montage beziehungsweise Demontage zusätzlich vereinfacht wird und die Kosten verringert werden.

Weiterhin bevorzugt sind ein oder mehrere Befestigungselemente mit formelastischen Eigenschaften vorgesehen. Eine Haltekraft und/oder Rückstellkraft zur Herstellung einer Verbindung kann somit auch durch Speicherung und Nutzung einer elastischen Verformungsenergie des Befestigungselements aufgebracht werden, wodurch die Anzahl an einzelnen Teilen vorteilhaft reduziert wird. Weiterhin können mit Vorteil kleinere Maßabweichungen ausgeglichen werden und der Montageaufwand sowie die Kosten reduziert werden.

Bevorzugt sind Befestigungselemente zur Herstellung einer Klippverbindung vorgesehen, aufweisend zumindest ein Klippelement, das ausgebildet ist, in wenigstens einen entsprechenden Aufnahmeabschnitt unter Ausnutzung seiner Formelastizität einzugreifen. Dies bietet besondere Vorteile hinsichtlich der Flexibilität in der Produktgestaltung, den Werkstoffen, des Montage- und Demontageaufwands, der Wartungsfreundlichkeit sowie der Kosten. Mit den oben bereits genannten Vorteilen können das wenigstens eine Klippelement und der wenigstens eine Aufnahmeabschnitt zumindest in Teilbereichen mit Passungen versehen sein.

Die Außenlichtscheibe des Gehäuses des Kraftfahrzeugscheinwerfers kann, wenn diese als separates Bauteil ausgebildet ist, zwischen dem Gehäuse und dem Vorsatzgehäuse über die Klippverbindung fixierbar sein. Der Montageaufwand wird dadurch vorteilhaft reduziert, während die Wartungsfreundlichkeit, vor allem auch in Bezug auf in dem Gehäuse des Kraftfahrzeugscheinwerfers liegende Komponenten, erhöht wird.

Bevorzugt ist dem lichtleitenden Element eine Lichtfunktion zugeordnet. Ferner bevorzugt handelt es sich bei der Lichtfunktion um ein Tagfahrlicht, um ein Kurvenlicht, ein Blinklicht, also um einen Fahrtrichtungsanzeiger oder aber um ein sonstiges Licht.

Bevorzugt umfasst das Gehäuse des Kraftfahrzeugscheinwerfers ferner die für die Ansteuerung des Leuchtmittels erforderliche Elektronik und/oder einen Stecker für den elektrischen Anschluss des Leuchtmittels an eine Energieversorgungsquelle.

Des Weiteren wird erfindungsgemäß ein Kraftfahrzeug zur Verfügung gestellt, welches einen erfindungsgemäßen Kraftfahrzeugscheinwerfer sowie einen Kühlergrill mit mindestens einer Kühlergrill-Lamelle aufweist, wobei das Vorsatzgehäuse optisch eine Verlängerung der mindestens einen Kühlergrill-Lamelle bildet. Ein derartig ausgeführtes Kraftfahrzeug ist aufgrund der höheren Effizienz der Leuchtvorrichtung für einen äußeren Betrachter besser sichtbar.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: verschiedene Frontansichten des Kühlergrills verschiedener Ausführungsbeispiele erfindungsgemäßer Kraftfahrzeuge mit einem ersten Ausführungsbeispiel eines erfindungsgemäßen Kraftfahrzeugscheinwerfers;
- Figur 2: verschiedene prinziphafte Darstellungen des ersten Ausführungsbeispiels eines erfindungsgemäßen Kraftfahrzeugscheinwerfers im in einem Kraftfahrzeug verbauten Zustand;
- Figur 3: verschiedene prinziphafte Darstellungen eines zweiten Ausführungsbeispiels eines erfindungsgemäßen Kraftfahrzeugscheinwerfers im in einem Kraftfahrzeug verbauten Zustand;
- Figur 4: verschiedene prinziphafte Darstellungen eines dritten Ausführungsbeispiels eines erfindungsgemäßen Kraftfahrzeugscheinwerfers im in einem Kraftfahrzeug verbauten Zustand;
- Figur 5: verschiedene prinziphafte Darstellungen eines vierten Ausführungsbeispiels eines erfindungsgemäßen Kraftfahrzeugscheinwerfers im in einem Kraftfahrzeug verbauten Zustand;
- Figur 6: verschiedene prinziphafte Darstellungen eines fünften Ausführungsbeispiels eines erfindungsgemäßen Kraftfahrzeugscheinwerfers im in einem Kraftfahrzeug verbauten Zustand;
- Figur 7: verschiedene prinziphafte Darstellungen eines sechsten Ausführungsbeispiels eines erfindungsgemäßen Kraftfahrzeugscheinwerfers im in einem Kraftfahrzeug verbauten Zustand;
- Figur 8: verschiedene prinziphafte Darstellungen eines siebten Ausführungsbeispiels eines erfindungsgemäßen Kraftfahrzeugscheinwerfers im in einem Kraftfahrzeug verbauten Zustand;
- Figur 9: eine prinziphafte Darstellung eines Ausführungsbeispiels eines erfindungsgemäßen Kraftfahrzeugscheinwerfers mit einer Klippverbindung;
- Figur 10: eine prinziphafte Darstellung eines Ausführungsbeispiels eines erfindungsgemäßen Kraftfahrzeugscheinwerfers mit an dem Vorsatzgehäuse angeordnetem Leuchtmittel und Kühlkörper;
- Figur 11: eine prinziphafte Darstellung eines Ausführungsbeispiels eines erfindungsgemäßen Kraftfahrzeugscheinwerfers mit an dem Vorsatzgehäuse angeordnetem Leuchtmittel und Kühlkörper in einer Explosionsansicht und
- Figur 12: eine Frontansicht eines Ausführungsbeispiels eines erfindungsgemäßen Kraftfahrzeugs mit erfindungsgemäß ausgeführten Kraftfahrzeugscheinwerfern.

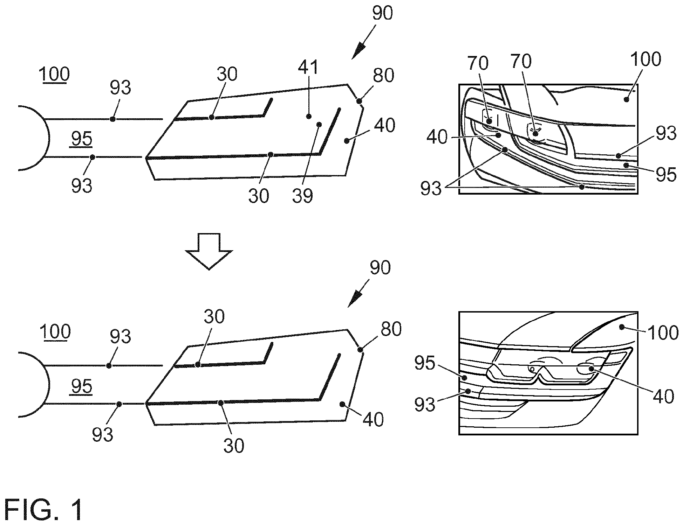

Figur 1 zeigt verschiedene Frontansichten des Kühlergrills 95 verschiedener Ausführungsbeispiele erfindungsgemäßer Kraftfahrzeuge 100 mit einem ersten Ausführungsbeispiel eines erfindungsgemäßen Kraftfahrzeugscheinwerfers 90. Links oben in Figur 1 ist das erste Ausführungsbeispiel des erfindungsgemäßen Kraftfahrzeugscheinwerfers 90 im abgeschalteten Zustand dargestellt, während es links unten in Figur 1 im Betrieb gezeigt ist. Rechts oben in Figur 1 ist eine direkte Frontansicht des ersten Ausführungsbeispiels des erfindungsgemäß ausgeführten Kraftfahrzeugscheinwerfers 90 im in einem erfindungsgemäß ausgeführten Kraftfahrzeug 100 verbauten Zustand dargestellt, während rechts unten in Figur 1 eine seitliche Frontansicht eines anderen Ausführungsbeispiels eines erfindungsgemäßen Kraftfahrzeugscheinwerfers 90 gezeigt ist.

Der Kraftfahrzeugscheinwerfer 90 umfasst ein Gehäuse 80, in welchem in diesem ersten Ausführungsbeispiel zwei Hauptlichtquellen 70 angeordnet sind. Den Hauptlichtquellen 70 sind in diesem ersten Ausführungsbeispiel rein beispielhaft verschiedene optische Komponenten wie Blenden und Reflektoren zugeordnet. Es können aber auch erfindungsgemäße Kraftfahrzeugscheinwerfer 90 mit anderen oder ohne diese optischen Komponenten ausgeführt werden. Der Kraftfahrzeugscheinwerfer 90 umfasst in diesem ersten Ausführungsbeispiel eine vollständig transparente Außenlichtscheibe 40, welche das Gehäuse 80 zu der äußeren Umgebung des Kraftfahrzeugscheinwerfers 90 hin abschließt und eine dem Inneren des Gehäuses 80 zugewandte Innenseite 41 und eine der äußeren Umgebung zugewandte Außenseite 39 aufweist. Die Außenlichtscheibe 40 kann bereichsweise auch opak, also bereichsweise lichtundurchlässig ausgeführt beziehungsweise gefertigt sein. Ferner umfasst der erfindungsgemäße Kraftfahrzeugscheinwerfer 90 in diesem ersten Ausführungsbeispiel rein beispielhaft zwei Vorsatzgehäuse 30, welche vor der Außenseite 39 der Außenlichtscheibe 40 angeordnet sind. In diesem ersten Ausführungsbeispiel weisen die Vorsatzgehäuse 30 eine jeweils spangenförmige Bauform auf und erstrecken sich jeweils über einen Teil der Außenlichtscheibe 40. Mit anderen Worten ausgedrückt erstrecken sich die Vorsatzgehäuse 30 in diesem ersten Ausführungsbeispiel jeweils linienförmig, also flügelartig beziehungsweise lamellenförmig entlang eines wesentlichen Teils der Außenlichtscheibe 40. Die Vorsatzgehäuse 30 weisen also jeweils eine flügelförmige Geometrie auf, welche jeweils zwei zueinander angewinkelt ausgerichtete Vorsatzgehäuse-Abschnitte umfassen, die in diesem ersten Ausführungsbeispiel rein beispielhaft einen stumpfen Winkel zwischen 90° und 160° einschließen. Ein Vorsatzgehäuse 30 eines erfindungsgemäß ausgeführten Kraftfahrzeugscheinwerfers 90 kann aber auch eine andere Form beziehungsweise eine andere Geometrie aufweisen, beispielsweise eine Wannenform, eine geradlinige Form oder aber auch eine ganz andere, beliebige Form beziehungsweise Geometrie. Ein Vorsatzgehäuse 30 eines erfindungsgemäß ausgeführten Kraftfahrzeugscheinwerfers 90 mit wannenförmigem beziehungsweise "w"-förmigem Verlauf beziehungsweise mit einer wannenförmigen, also "w"-förmigen Geometrie ist in einer beispielhaften Ausführung rechts unten in Figur 1 gezeigt.

In diesem Ausführungsbeispiel weist der Kühlergrill 95 des erfindungsgemäß ausgeführten Kraftfahrzeugs 100 zwei horizontal, also im Wesentlichen parallel zum Grund, auf welchem das Kraftfahrzeug 100 steht, verlaufende Kühlergrill-Lamellen 93 auf. Die Vorsatzgehäuse 30 des ersten Ausführungsbeispiels des erfindungsgemäßen Kraftfahrzeugscheinwerfers 90 schließen direkt an diese Kühlergrill-Lamellen 93 an und bilden eine optische Verlängerung der Kühlergrill-Lamellen 93.

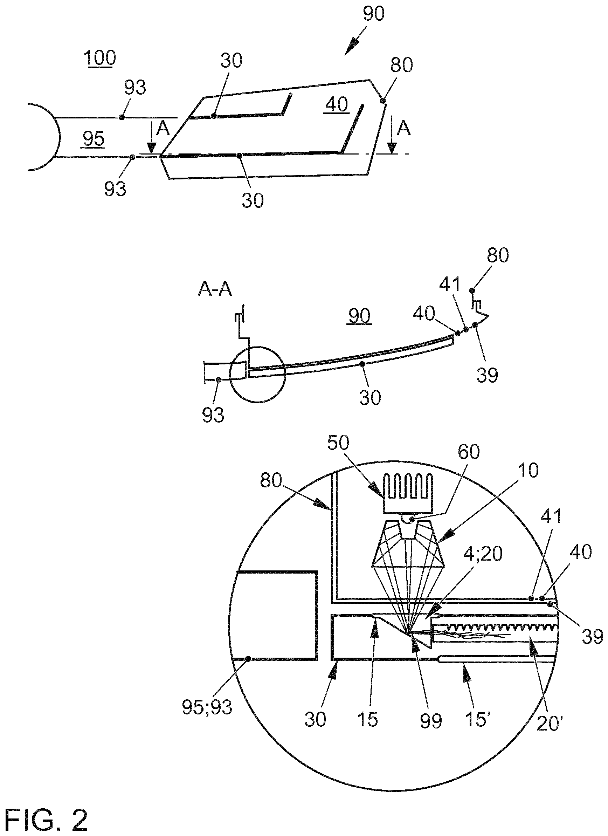

In Figur 2 sind verschiedene prinziphafte Darstellungen des ersten Ausführungsbeispiels eines erfindungsgemäßen Kraftfahrzeugscheinwerfers 90 im in einem Kraftfahrzeug 100 verbauten Zustand gezeigt. Mit anderen Worten ausgedrückt ist in Figur 2 das bereits in Figur 1 gezeigte und oben beschriebene erste Ausführungsbeispiel eines erfindungsgemäßen Kraftfahrzeugscheinwerfers 90 dargestellt. Der Kraftfahrzeugscheinwerfer 90 ist dabei unten links und unten rechts in Figur 2 geschnitten dargestellt. Die gleich bezeichneten Komponenten in Figur 2 entsprechen den in Figur 1 gezeigten, so dass das oben für diese Komponenten Beschriebene auch für die in Figur 2 gleich bezeichneten Komponenten gilt. In dem ersten Ausführungsbeispiel des erfindungsgemäßen Kraftfahrzeugscheinwerfers 90 umfasst dieser ein in dem Gehäuse 80 angeordnetes Leuchtmittel 60, welches in dem in Figur 2 gezeigten ersten Ausführungsbeispiel in einem Randbereich innerhalb des Gehäuses 80 angeordnet ist. Bei dem Leuchtmittel 60 handelt es sich in diesem ersten Ausführungsbeispiel rein beispielhaft um eine Leuchtdiode. Es können allerdings auch erfindungsgemäße Kraftfahrzeugscheinwerfer 90 mit einem oder mehr als einem und anders ausgeführten Leuchtmitteln 60 realisiert werden. Beispielsweise kann es sich bei einem Leuchtmittel 60 eines erfindungsgemäßen Kraftfahrzeugscheinwerfers 90 auch um eine Halogenleuchte oder aber auch um ein ganz anderes Leuchtmittel 60 handeln. Der Kraftfahrzeugscheinwerfer 90 umfasst ferner einen ebenfalls in dem Gehäuse 80 angeordneten Kühlkörper 50 zur Kühlung des Leuchtmittels 60, wobei das Leuchtmittel 60 in diesem Ausführungsbeispiel rein beispielhaft auf dem Kühlkörper 50 angeordnet ist.

In diesem ersten Ausführungsbeispiel ist in dem Vorsatzgehäuse 30 ein lichtleitendes Element 20 angeordnet, welches sich entlang des Innenraums des Vorsatzgehäuses 30 erstreckt und einen wesentlichen Teil desselben ausfüllt. Das lichtleitende Element 20 ist dazu ausgebildet, mittels des Leuchtmittels 60 eingestrahltes Licht 99 zu leiten. In diesem ersten Ausführungsbeispiel ist das lichtleitende Element 20 also als länglicher Lichtleiter 20' ausgeführt, welcher einen wesentlichen Teil des Innenraums des Vorsatzgehäuses 30 ausfüllt. Mit anderen Worten ausgedrückt ist das lichtleitende Element 20 als länglicher, an die Form des Vorsatzgehäuses 30 angepasster lichtleitender Stab ausgebildet, welcher in das Vorsatzgehäuse 30 eingebettet ist. Ferner ist in diesem ersten Ausführungsbeispiel innerhalb des Gehäuses 80 eine Kollimator-Optik 10 vor dem Leuchtmittel 60 angeordnet, welche das von dem Leuchtmittel 60 emittierte Licht 99 zu bündeln vermag. Ein Bereich der der Außenseite 39 der Außenlichtscheibe 40 zugewandten Wand des Vorsatzgehäuses 30 ist in diesem ersten Ausführungsbeispiel als transparente Lichtscheibe 15 ausgeführt, durch welche das Leuchtmittel 60 Licht 99 in das Vorsatzgehäuse 30 einzustrahlen vermag und hinter welchem innenseitig eine Umlenkoptik 4 innerhalb des Vorsatzgehäuses 30 angeordnet ist, mittels welcher eingestrahltes Licht 99 in den länglichen Lichtleiter 20' umgelenkt wird. Mit anderen Worten ausgedrückt ist der Bereich der der Außenseite 39 der Außenlichtscheibe 40 zugewandten Wand des Vorsatzgehäuses 30, welcher auf der Höhe der Kollimator-Optik 10 liegt, als transparente Lichtscheibe 15 ausgeführt, so dass aus der Kollimator-Optik 10 austretendes Licht in das Vorsatzgehäuse 30 eingestrahlt wird. Unmittelbar hinter der transparenten Lichtscheibe 15 ist eine Umlenkoptik 4 angeordnet, welche in diesem ersten Ausführungsbeispiel rein beispielhaft gemeinsam mit der transparenten Lichtscheibe 15 gefertigt beziehungsweise ausgeführt ist. In anderen Ausführungsbeispielen erfindungsgemäßer Kraftfahrzeugscheinwerfer 90 kann die Umlenkoptik 4 aber auch als separates Teil ausgeführt sein, welches losgelöst von der transparenten Lichtscheibe 15 vor dieser angeordnet ist. Die Umlenkoptik 4 ist in diesem ersten Ausführungsbeispiel rein beispielhaft mit dem länglichen Lichtleiter 20' verbunden beziehungsweise gemeinsam mit diesem gefertigt und vermag mittels des Leuchtmittels 60 in die Umlenkoptik 4 eingekoppeltes Licht 99 in den länglichen Lichtleiter 20' umzulenken. Es können allerdings auch erfindungsgemäße Kraftfahrzeugscheinwerfer 90 ausgeführt werden, bei welchen die Umlenkoptik 4 mit dem länglichen Lichtleiter 20' nicht in Verbindung steht, also als vollständig separates Bauteil vor dem länglichen Lichtleiter 20' angeordnet ist.

In diesem ersten Ausführungsbeispiel ist ein Teil der der Außenlichtscheibe 40 gegenüberliegenden Wand des Vorsatzgehäuses 30 durch eine weitere transparente Lichtscheibe 15' gebildet. Sie erstreckt sich in diesem ersten Ausführungsbeispiel rein beispielhaft im Wesentlichen über den Bereich des Vorsatzgehäuses 30, in welchem das lichtleitende Element 20, also der längliche Lichtleiter 20' angeordnet ist, so dass die Lichteinkopplung in den länglichen Lichtleiter 20' durch den opaken, also lichtundurchlässigen Teil der der Außenlichtscheibe 40 gegenüberliegenden Wand des Vorsatzgehäuses 30 verdeckt ist. Des Weiteren weist der längliche Lichtleiter 20' eine Vielzahl an Auskoppelstrukturen auf, mittels welchen in den länglichen Lichtleiter 20' eingekoppeltes Licht durch die weitere transparente Lichtscheibe 15' aus dem Kraftfahrzeugscheinwerfer 90 ausgekoppelt wird.

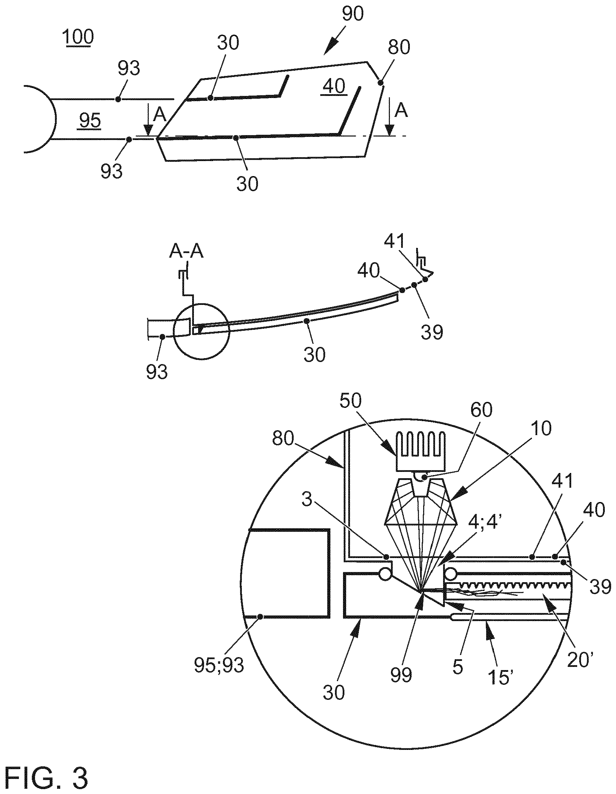

In Figur 3 sind verschiedene prinziphafte Darstellungen eines zweiten Ausführungsbeispiels eines erfindungsgemäßen Kraftfahrzeugscheinwerfers 90 im in einem Kraftfahrzeug 100 verbauten Zustand dargestellt. Bei dem in Figur 3 dargestellten zweiten Ausführungsbeispiel handelt es sich im Wesentlichen um das in Figur 2 dargestellte. Die gleich bezeichneten Komponenten in Figur 3 entsprechen den in Figur 2 gezeigten, so dass das oben für diese Komponenten Beschriebene auch für die in Figur 3 gleich bezeichneten Komponenten gilt. In diesem zweiten Ausführungsbeispiel weist die Umlenkoptik 4 eine Einkoppelseite 3 und eine Auskoppelseite 5 auf, wobei die Einkoppelseite 3 der Umlenkoptik 4 aus einem Teil der Außenlichtscheibe 40 gebildet ist und die Umlenkoptik 4 durch eine in einer Wand des Vorsatzgehäuses 30 gebildete Öffnung hindurch in das Vorsatzgehäuse 30 hineinragt. Dementsprechend ist die Auskoppelseite 5 der Umlenkoptik 4 vollständig innerhalb des Vorsatzgehäuses 30 und vor einer Lichteinkoppelstelle des länglichen Lichtleiters 20' angeordnet. Mit anderen Worten ausgedrückt ist die Umlenkoptik 4 in diesem zweiten Ausführungsbeispiel aus der Außenlichtscheibe 40 des Kraftfahrzeugscheinwerfers 90 herausgebildet, also gemeinsam mit der Außenlichtscheibe 40 gefertigt. Die Umlenkoptik 4 ragt durch eine Öffnung hindurch, welche passgenau innerhalb eines der Außenseite 39 der Außenlichtscheibe 40 zugewandten Wandabschnitts der Rückwand des Vorsatzgehäuses 30 vorgesehen ist. Die Öffnung des Vorsatzgehäuses 30, durch welche die Umlenkoptik 4 in das Vorsatzgehäuse 30 hineinragt, ist in diesem zweiten Ausführungsbeispiel rein beispielhaft mittels eines O-Dichtringes gegen das Eindringen von Schmutz beziehungsweise Feuchtigkeit abgedichtet. Mit anderen Worten ausgedrückt steht das Vorsatzgehäuse 30 im Bereich der Öffnung über den O-Dichtring mit der Umlenkoptik 4 in Kontakt. Der Kühlkörper 50, das Leuchtmittel 60 und die Kollimator-Optik 10 sind innerhalb des Gehäuses 80 des Kraftfahrzeugscheinwerfers 90 an einem äußeren Rand angeordnet. Dementsprechend ist auch die Umlenkoptik 4 an einem äußeren Rand des Vorsatzgehäuses 30 positioniert und ragt somit an einem seitlichen Ende des Vorsatzgehäuses 30 in selbiges hinein. Die Einkopplung von Licht 99 in den länglichen Lichtleiter 20' kann somit an einem seitlichen Ende desselben erfolgen.

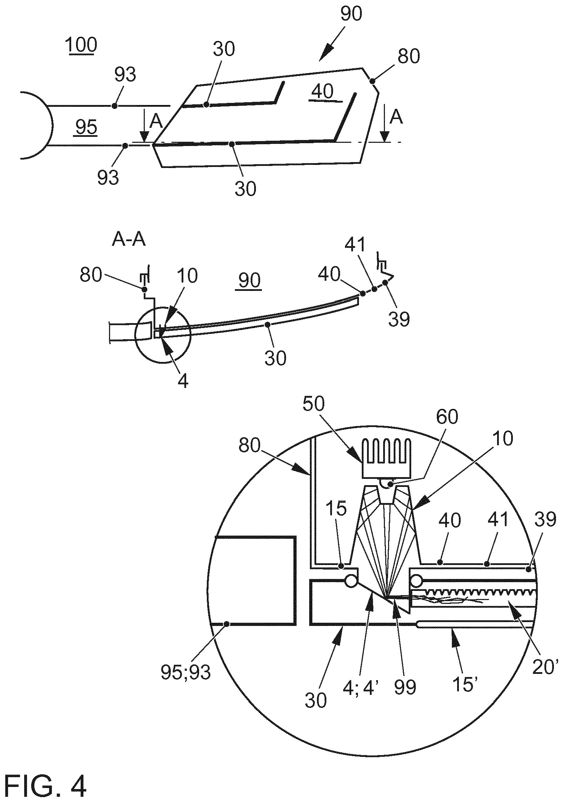

In Figur 4 sind verschiedene prinziphafte Darstellungen eines dritten Ausführungsbeispiels eines erfindungsgemäßen Kraftfahrzeugscheinwerfers 90 im in einem Kraftfahrzeug 100 verbauten Zustand dargestellt. Bei dem in Figur 4 dargestellten dritten Ausführungsbeispiel handelt es sich im Wesentlichen um das in Figur 3 dargestellte. Die gleich bezeichneten Komponenten in Figur 4 entsprechen den in Figur 3 gezeigten, so dass das oben für diese Komponenten Beschriebene auch für die in Figur 4 gleich bezeichneten Komponenten gilt. In diesem dritten Ausführungsbeispiel weist die Kollimator-Optik 10 eine Auskoppelfläche 11 auf, welche zumindest teilweise mit der Einkoppelseite 3 der Umlenkoptik 4 zusammenfällt. Ferner sind in diesem dritten Ausführungsbeispiel die Kollimator-Optik 10, die Außenlichtscheibe 40 und die Umlenkoptik 4 als ein gemeinsames, zusammenhängendes Bauteil ausgebildet. Mit anderen Worten ausgedrückt sind in diesem dritten Ausführungsbeispiel die Kollimator-Optik 10, die Außenlichtscheibe 40 und die Umlenkoptik 4 als ein einziges Bauteil ausgebildet, welches die direkte Lichteinkopplung innerhalb des Gehäuses 80 sowie die Lichtauskopplung in einer von der Lichteinkoppelrichtung verschiedenen Richtung außerhalb des Gehäuses 80 und innerhalb des Vorsatzgehäuses 30 ermöglicht. In diesem dritten Ausführungsbeispiel ist die Öffnung des Vorsatzgehäuses 30, durch welche die Umlenkoptik 4 in das Vorsatzgehäuse 30 hineinragt, rein beispielhaft mittels eines Dichtringes gegen das Eindringen von Schmutz beziehungsweise Feuchtigkeit abgedichtet. Mit anderen Worten ausgedrückt steht das Vorsatzgehäuse 30 im Bereich der Öffnung über den Dichtring mit der Umlenkoptik 4 in Kontakt. Es können allerdings auch erfindungsgemäße Kraftfahrzeugscheinwerfer 90 ausgeführt werden, bei welchen die Abdichtung der Öffnung anders als über einen Dichtring beziehungsweise einen O-Dichtring erfolgt.

In den vorhergehend beschriebenen Ausführungsbeispielen ist die Umlenkoptik 4 jeweils als Prisma 4' ausgeführt. Es können jedoch auch erfindungsgemäße Kraftfahrzeugscheinwerfer 90 realisiert werden, bei welchen die Umlenkoptik 4 anders, beispielsweise als Spiegelanordnung, als eine Kombination aus einer Spiegelanordnung und einem Prisma 4' oder aber auch ganz anders, also beispielsweise unter Verwendung ganz anderer Komponenten, ausgeführt sein kann.

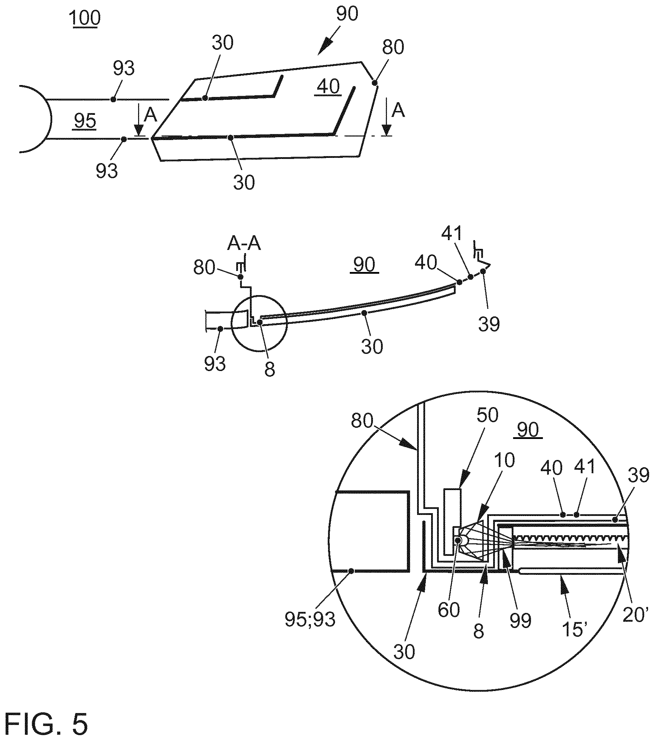

In Figur 5 sind verschiedene prinziphafte Darstellungen eines vierten Ausführungsbeispiels eines erfindungsgemäßen Kraftfahrzeugscheinwerfers 90 im in einem Kraftfahrzeug 100 verbauten Zustand dargestellt. Bei dem in Figur 5 dargestellten vierten Ausführungsbeispiel handelt es sich im Wesentlichen um das in Figur 4 dargestellte. Die gleich bezeichneten Komponenten in Figur 5 entsprechen den in Figur 4 gezeigten, so dass das oben für diese Komponenten Beschriebene auch für die in Figur 5 gleich bezeichneten Komponenten gilt. In diesem vierten Ausführungsbeispiel weist die Außenlichtscheibe 40 einen sich in Richtung der äußeren Umgebung des Kraftfahrzeugscheinwerfers 90 erstreckenden Vorsprung 8 auf, welcher durch eine in einer Wand des Vorsatzgehäuses 30 gebildete Öffnung hindurch in das Vorsatzgehäuse 30 hineinragt, wobei das Leuchtmittel 60 samt der vor diesem angeordneten Kollimator-Optik 10 in dem Vorsprung 8 angeordnet ist und Licht 99 in den länglichen Lichtleiter 20' einzukoppeln vermag. Mit anderen Worten ausgedrückt weist die Außenlichtscheibe 40 in diesem vierten Ausführungsbeispiel in einem Randbereich einen Vorsprung 8 auf, welcher rein beispielhaft einen rechteckigen Querschnitt aufweist. Mit anderen Worten ausgedrückt ist der Querschnitt des Vorsprungs 8 topfförmig beziehungsweise "u"-förmig. Der aus der Außenlichtscheibe 40 herausgebildete Vorsprung 8 bildet eine Kammer, welche in eine an einem Ende des Vorsatzgehäuses 30 gebildete Öffnung hineinragt. In diesem vierten Ausführungsbeispiel sind das Leuchtmittel 60 als auch die Kollimator-Optik 10 innerhalb des kammerartigen Vorsprungs 8 angeordnet. Das Leuchtmittel 60 und die Kollimator-Optik 10 sind dabei verglichen mit den zuvor beschriebenen Ausführungsbeispielen um 90° gedreht, so dass die Abstrahlrichtung des Leuchtmittels 60 mit der länglichen Ausbreitungsrichtung beziehungsweise Ausrichtung des länglichen Lichtleiters 20' zusammenfällt. Aus diesem Grund kann bei einem Kraftfahrzeugscheinwerfer 90 in dieser vierten Ausführung eine Umlenkoptik 4 entfallen. Das mittels des Leuchtmittels 60 erzeugte Licht 99 wird über die Kollimator-Optik 10 direkt in den länglichen Lichtleiter 20' eingekoppelt.

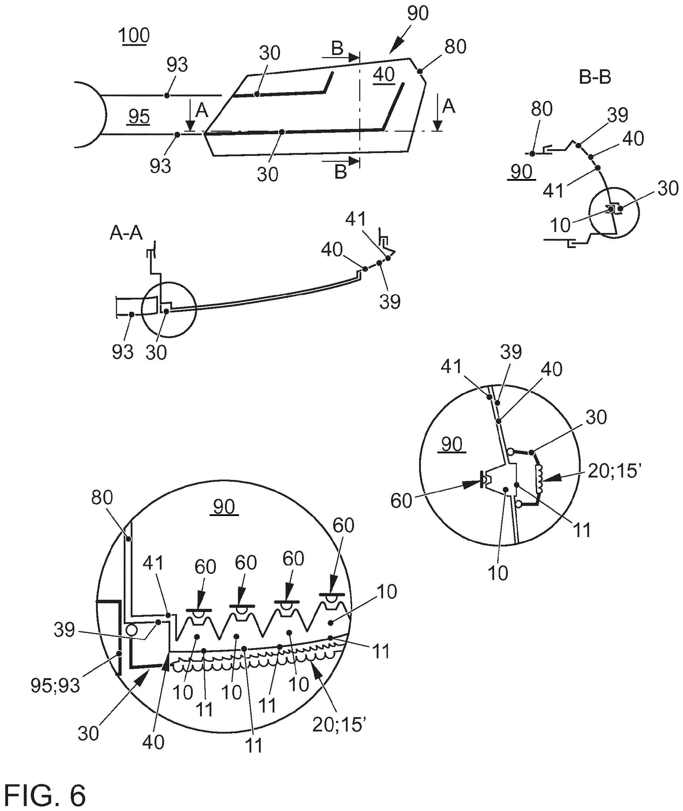

In Figur 6 sind verschiedene prinziphafte Darstellungen eines fünften Ausführungsbeispiels eines erfindungsgemäßen Kraftfahrzeugscheinwerfers 90 im in einem Kraftfahrzeug 100 verbauten Zustand dargestellt. Bei dem in Figur 6 dargestellten fünften Ausführungsbeispiel handelt es sich im Wesentlichen um das in Figur 5 dargestellte. Die gleich bezeichneten Komponenten in Figur 6 entsprechen den in Figur 5 gezeigten, so dass das oben für diese Komponenten Beschriebene auch für die in Figur 6 gleich bezeichneten Komponenten gilt. In diesem fünften Ausführungsbeispiel ist eine Vielzahl an Leuchtmitteln 60 sowie eine Vielzahl an Kollimator-Optiken 10 vorgesehen, wobei die Vielzahl an Leuchtmitteln 60 samt den jeweils zugehörigen Kollimator-Optiken 10 innerhalb des Gehäuses 80 entlang den Vorsatzgehäusen 30 vor der Innenseite 41 der Außenlichtscheibe 40 angeordnet sind. Dabei ist jedem Leuchtmittel 60 eine Kollimator-Optik 10 zugeordnet. Die Kollimator-Optiken 10 weisen jeweils eine Auskoppelfläche 11 auf und sind einteilig mit der Außenlichtscheibe 40 gefertigt, wobei die Auskoppelflächen 11 der Kollimator-Optiken 10 durch jeweils einen Teil der Außenlichtscheibe 40 gebildet sind. In diesem fünften Ausführungsbeispiel bildet die Außenlichtscheibe 40 selbst eine Wand des Vorsatzgehäuses 30. Mit anderen Worten ausgedrückt ist das Vorsatzgehäuse 30 in diesem fünften Ausführungsbeispiel halboffen ausgeführt und auf die Außenseite 39 der Außenlichtscheibe 40 aufgesetzt und mit dieser verbunden. Abermals mit anderen Worten beschrieben weist das Vorsatzgehäuse 30 in diesem Ausführungsbeispiel die Form einer Schiene mit "u"-förmigem Querschnitt auf und ist mit der geöffneten Seite auf die Außenseite 39 der Außenlichtscheibe 40 aufgesetzt und mit dieser verbunden. Im Kontaktbereich beziehungsweise im Verbindungsbereich zwischen dem Vorsatzgehäuse 30 und der Außenlichtscheibe 40 ist eine Dichtung angeordnet, welche die Kombination aus Vorsatzgehäuse 30 und Außenlichtscheibe 40 gegen ein Eindringen von Schmutz und Wasser in das Vorsatzgehäuse 30 abdichtet. Der von dem Vorsatzgehäuse 30 eingeschlossene Bereich der Außenseite 39 der Außenlichtscheibe 40 ist im Wesentlichen durch die aneinander gereihten Auskoppelflächen 11 der in einer Reihe nebeneinander angeordneten Kollimator-Optiken 10 gebildet. Der den Auskoppelflächen 11 der Außenlichtscheibe 40 gegenüberliegende Wandabschnitt des Vorsatzgehäuses 30 ist in diesem fünften Ausführungsbeispiel durch eine weitere Lichtscheibe 15' gebildet, welche in diesem fünften Ausführungsbeispiel eine Vielzahl an Strukturen zur Lichteinkopplung und zur Lichtauskopplung aufweist.

Das durch die Leuchtmittel 60 emittierte Licht 99 wird somit zunächst in die Kollimator-Optiken 10 eingekoppelt, von welchen es in das Vorsatzgehäuse 30 ausgekoppelt wird. Das in das Vorsatzgehäuse 30 eingekoppelte Licht 99 wird wiederum über die Strukturen zur Lichteinkopplung in die weitere Lichtscheibe 15' eingekoppelt und über dessen Strukturen zur Lichtauskopplung in die äußere Umgebung des Kraftfahrzeugs 100 ausgekoppelt. Es können auch erfindungsgemäße Kraftfahrzeugscheinwerfer 90 ausgeführt werden, bei welchen die Auskoppelflächen 40 der Kollimator-Optiken 10 außerhalb des Gehäuses 80 zwischen der Außenseite 39 der Außenlichtscheibe 40 und der die weitere Lichtscheibe 15' aufweisenden Wand des Vorsatzgehäuses 30 angeordnet sind, also die Außenlichtscheibe 40 durchstoßen. Auch in einem derartigen Ausführungsbeispiel sind die Kollimator-Optiken 10 gemeinsam mit der Außenlichtscheibe 40 gefertigt. Das lichtleitende Element 20 ist in diesem fünften Ausführungsbeispiel durch die weitere Lichtscheibe 15' gebildet. Durch die Kombination von den Strukturen zur Lichteinkopplung mit den Strukturen zur Lichtauskopplung an der weiteren Lichtscheibe 15' wird eine ganz spezielle Lichtverteilung mittels derselben realisiert.

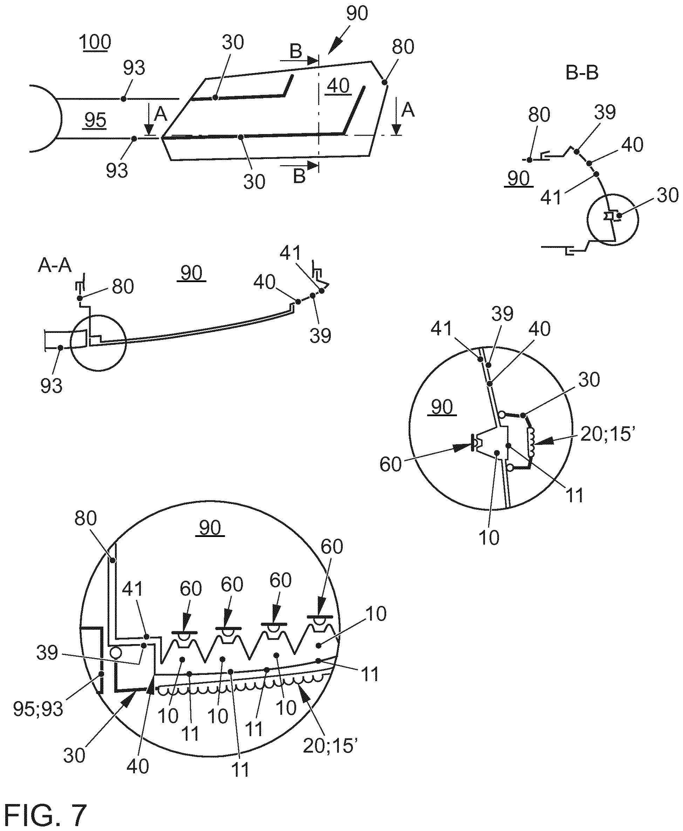

In Figur 7 sind verschiedene prinziphafte Darstellungen eines sechsten Ausführungsbeispiels eines erfindungsgemäßen Kraftfahrzeugscheinwerfers 90 im in einem Kraftfahrzeug 100 verbauten Zustand dargestellt. Bei dem in Figur 7 dargestellten sechsten Ausführungsbeispiel handelt es sich im Wesentlichen um das in Figur 6 dargestellte. Die gleich bezeichneten Komponenten in Figur 7 entsprechen den in Figur 6 gezeigten, so dass das oben für diese Komponenten Beschriebene auch für die in Figur 7 gleich bezeichneten Komponenten gilt. Im Unterschied zu dem in Figur 6 gezeigten fünften Ausführungsbeispiel weist die weitere Lichtscheibe 15' in dem in Figur 7 gezeigten sechsten Ausführungsbeispiel keine Strukturen zur Lichteinkopplung auf, sondern lediglich Strukturen zur Lichtauskopplung. In dieser sechsten Ausführung ist mittels des erfindungsgemäßen Kraftfahrzeugscheinwerfers 90 ein abermals eigenes Lichtbild emittierbar, welches von den Lichtbildern, die mittels der vorhergehend beschriebenen Ausführungsbeispiele erzeugbar sind, abweicht.

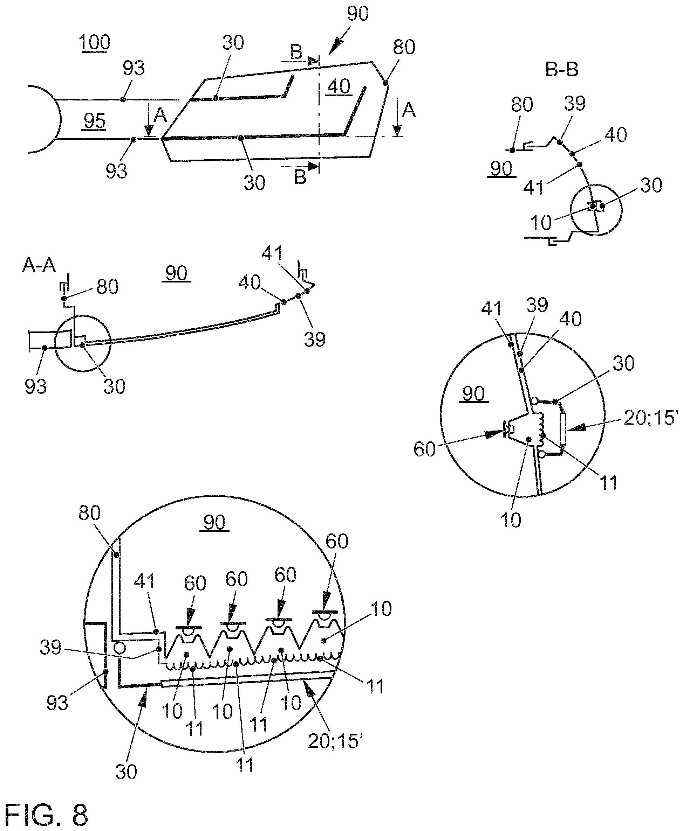

In Figur 8 sind verschiedene prinziphafte Darstellungen eines siebten Ausführungsbeispiels eines erfindungsgemäßen Kraftfahrzeugscheinwerfers 90 im in einem Kraftfahrzeug 100 verbauten Zustand dargestellt. Bei dem in Figur 8 dargestellten siebten Ausführungsbeispiel handelt es sich im Wesentlichen um das in Figur 7 dargestellte. Die gleich bezeichneten Komponenten in Figur 8 entsprechen den in Figur 7 gezeigten, so dass das oben für diese Komponenten Beschriebene auch für die in Figur 8 gleich bezeichneten Komponenten gilt. Das in Figur 8 gezeigte siebte Ausführungsbeispiel weist im Gegensatz zu dem in Figur 7 gezeigten sechsten Ausführungsbeispiel eine weitere Lichtscheibe 15' ganz ohne Strukturen zur Lichteinkopplung oder zur Lichtauskopplung auf. In dem in Figur 8 gezeigten siebten Ausführungsbeispiel weisen hingegen die Auskoppelflächen 11 der Kollimator-Optiken 10 Strukturen zur Lichtauskopplung auf, welche das mittels dem erfindungsgemäßen Kraftfahrzeugscheinwerfer 90 emittierbare Lichtbild charakteristisch formen. Beispielsweise kann das über die Kollimator-Optiken geführte Licht 99 mittels der auf den Auskoppelflächen 11 vorgesehenen Strukturen zur Lichtauskopplung aufgefächert werden.

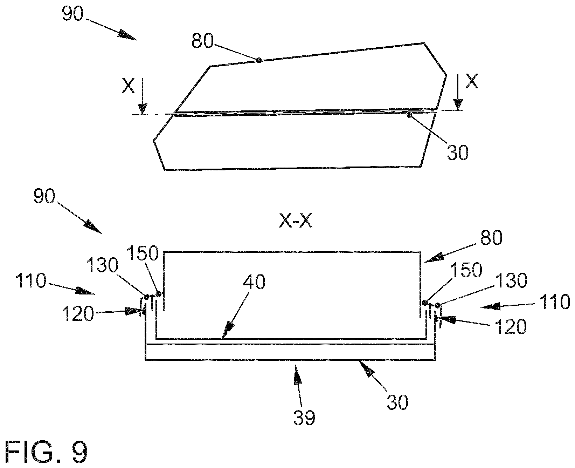

In Figur 9 ist eine prinziphafte Darstellung eines Ausführungsbeispiels eines erfindungsgemäßen Kraftfahrzeugscheinwerfers 90 mit einer Klippverbindung 110 dargestellt.

Die gleich bezeichneten Komponenten in Figur 9 entsprechen den in Figur 1 gezeigten, so dass das oben für diese Komponenten Beschriebene auch für die in Figur 9 gleich bezeichneten Komponenten gilt. Das im oberen Teil der Figur 9 Beschriebene basiert auf dem links oben in Figur 1 beschriebenen ersten Ausführungsbeispiel des erfindungsgemäßen Kraftfahrzeugscheinwerfers 90 in vereinfachter Form. Figur 9 zeigt das Vorsatzgehäuse 30, welches mit dem Gehäuse 80 des Kraftfahrzeugscheinwerfers 90 über die Klippverbindung 110 verbunden ist. Das Vorsatzgehäuse 30 ist vor der Außenseite der Außenlichtscheibe 39 des Kraftfahrzeugscheinwerfers 90 an dem Gehäuse 80 über mehrere formelastische Klippelemente 120 fixiert. Die Klippelemente 120 greifen in entsprechende Aufnahmeabschnitte 130 des Gehäuses 80 ein. Die Außenlichtscheibe 40 ist in Position und Orientierung über Formelemente 150, verkörpert durch Nuten, relativ zu dem Gehäuse 80 positioniert und mit diesem verklebt.

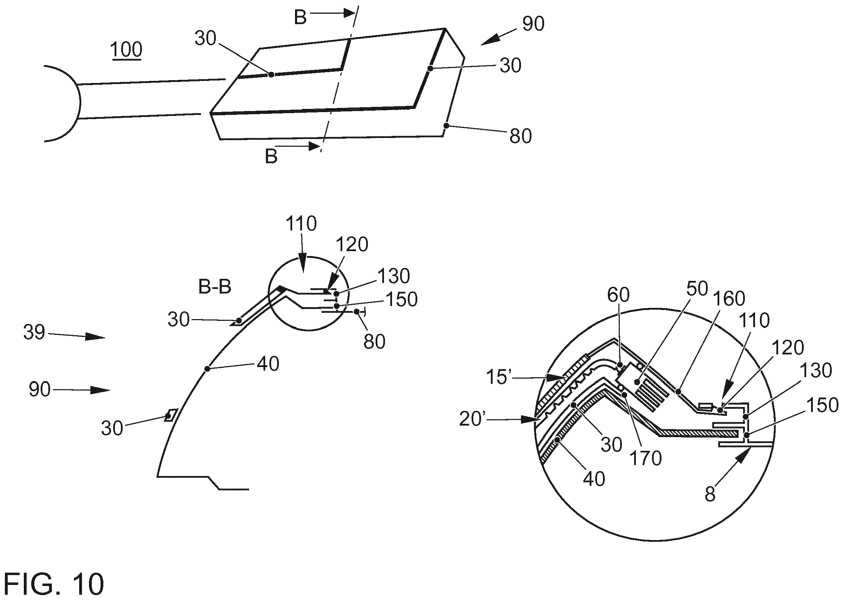

In Figur 10 ist eine prinziphafte Darstellung eines Ausführungsbeispiels eines erfindungsgemäßen Kraftfahrzeugscheinwerfers 90 mit an dem Vorsatzgehäuse 30 angeordnetem Leuchtmittel 60 und Kühlkörper 50 dargestellt. Die gleich bezeichneten Komponenten in Figur 10 entsprechen den in Figur 1 gezeigten, so dass das oben für diese Komponenten Beschriebene auch für die in Figur 10 gleich bezeichneten Komponenten gilt. Das im oberen Teil der Figur 10 Beschriebene basiert auf dem links oben in Figur 1 beschriebenen ersten Ausführungsbeispiel des erfindungsgemäßen Kraftfahrzeugscheinwerfers 90. Im unteren linken Teil der Figur 10 ist der erfindungsgemäße Kraftfahrzeugscheinwerfer 90 in einer Schnittansicht dargestellt, auf der das Vorsatzgehäuse 30, die Außenlichtscheibe 40, in dieser Ausführungsform die Klippverbindung 110 mit hier exemplarisch nur einseitig dargestellten Aufnahmeabschnitten 130 und Klippelementen 120 sowie die Formelemente 150 und das Gehäuse 80 in teilweiser Darstellung zu sehen sind. Die Klippverbindung 110 und die Anordnung des wenigstens einen weiteren Leuchtmittels 60 und des Kühlkörpers 50 sind im unteren rechten Teil in einer Detailvergrößerung näher beschrieben. Deutlich erkennbar sind Leuchtmittel 60 und Kühlkörper 50 an dem Vorsatzgehäuse 30 angeordnet beziehungsweise derart befestigt, dass die Komponenten teilweise in das Vorsatzgehäuse 30 hineinragen. Eine in die Klippverbindung 110 mündende äußere Wandung 160 umschließt das Leuchtmittel 60 und den Kühlkörper 50 nur teilweise, so dass diese nach Innen der Außenlichtscheibe 40 gegenüberliegen. In anderen bevorzugten Ausführungsformen kann die Wandung aber auch fehlen und an ihrer Stelle eine innere Wandung 170 in die Klippverbindung 110 übergehen, so dass das wenigstens eine Leuchtmittel 60 und der Kühlkörper 50 der Umwelt zugewandt sind. In weiteren Ausführungsformen können das Leuchtmittel 60 und der Kühlkörper 50 auch vollständig in dem Vorsatzgehäuse 30 eingekapselt sein, rein beispielhaft durch entsprechende Ausgestaltung der Wandungen 160, 170 um die Komponenten herum. An das Leuchtmittel 60 schließt sich der längliche Lichtleiter 20' an. Das Leuchtmittel 60 ist dabei ausgebildet, Licht 99 in den länglichen Lichtleiter 20' einzustrahlen. Das Vorsatzgehäuse 30 weist eine weitere Lichtscheibe 15' auf, über die Licht 99 in die Umwelt emittiert werden kann.

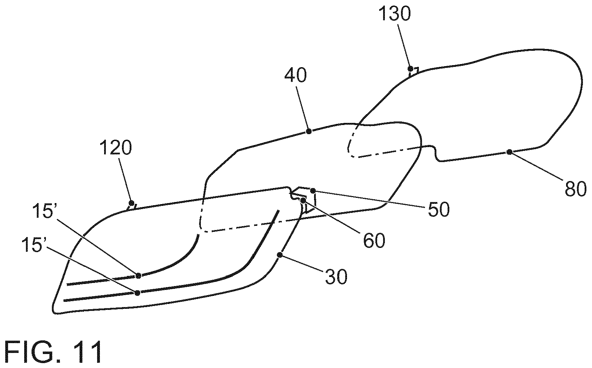

In Figur 11 ist eine prinziphafte Darstellung eines Ausführungsbeispiels eines erfindungsgemäßen Kraftfahrzeugscheinwerfers 90 mit an dem Vorsatzgehäuse 30 angeordnetem Leuchtmittel 60 und Kühlkörper 50 in einer Explosionsansicht dargestellt. Die gleich bezeichneten Komponenten in Figur 11 entsprechen den in Figur 1 gezeigten, so dass das oben für diese Komponenten Beschriebene auch für die in Figur 11 gleich bezeichneten Komponenten gilt. In der Figur 11 sind angedeutet räumlich versetzt das Vorsatzgehäuse 30, die Außenlichtscheibe 40 und das Gehäuse 80 dargestellt. Die Klippverbindung ist hier nur durch ein exemplarisches Klippelement 120 an dem Vorsatzgehäuse 30 und durch einen exemplarischen Aufnahmeabschnitt 130 für das Klippelement 120 angedeutet. Die Klippverbindung kann aus einer Vielzahl an Klippelementen 120 und Aufnahmeabschnitten 120 bestehen. Deutlich erkennbar ist das wenigstens eine weitere Leuchtmittel 60 außen an dem Vorsatzgehäuse angeordnet. An dem Leuchtmittel 60 ist der Kühlkörper 50 angeordnet. Es ist in diesem Ausführungsbeispiel noch ein weiteres Leuchtmittel 60 und ein Kühlkörper 50 vorgesehen, die hier nicht weiter dargestellt sind und teilweise in dem Vorsatzgehäuse 30 angeordnet sind beziehungsweise durch dieses verdeckt werden. Das Vorsatzgehäuse 30 weist in diesem Ausführungsbeispiel zwei weitere Lichtscheiben 15' auf, hinter denen je ein länglicher hier nicht weiter dargestellter Lichtleiter 20' angeordnet ist. Je ein länglicher Lichtleiter 20' wird durch eines der Leuchtmittel 60 mit Kühlkörper 50 mit Licht 99 gespeist.

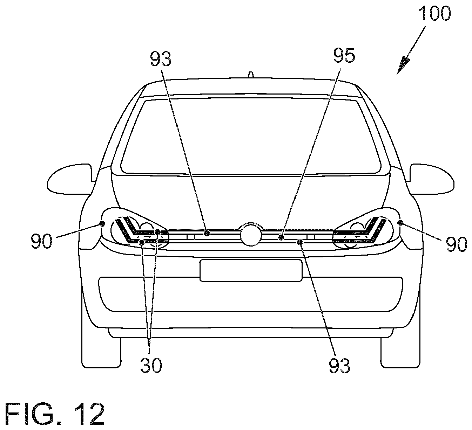

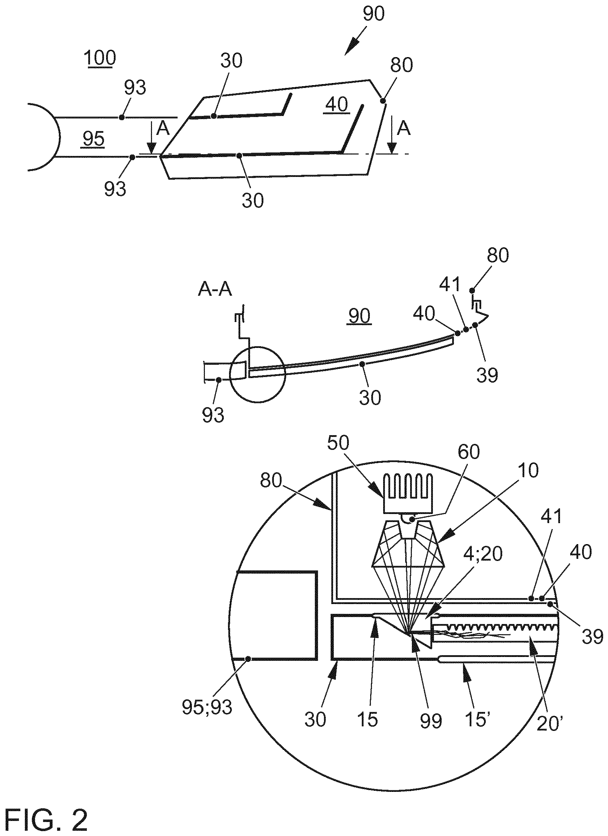

In Figur 12 ist eine Frontansicht eines Ausführungsbeispiels eines erfindungsgemäßen Kraftfahrzeugs 100 mit erfindungsgemäß ausgeführten Kraftfahrzeugscheinwerfern 90 dargestellt. Bei den erfindungsgemäß ausgeführten Kraftfahrzeugscheinwerfern 90 handelt es sich in diesem Ausführungsbeispiel des Kraftfahrzeugs 100 rein beispielhaft um die beiden Frontscheinwerfer 90 des Kraftfahrzeugs 100, welche gemäß dem zweiten, oben beschriebenen Ausführungsbeispiel realisiert sind. Das Kraftfahrzeug 100 weist ferner einen Kühlergrill 95 in seiner Front auf, welcher zwei übereinander angeordnete Kühlergrill-Lamellen 93 umfasst, die sich von Frontscheinwerfer 90 zu Frontscheinwerfer 90 erstrecken. Die Vorsatzgehäuse 30 der Kraftfahrzeugscheinwerfer 90 bilden in diesem Ausführungsbeispiel des Kraftfahrzeugs 100 eine Verlängerung der Kühlergrill-Lamellen 93. Es können allerdings auch erfindungsgemäße Kraftfahrzeuge 100 mit erfindungsgemäßen Kraftfahrzeugscheinwerfern 90 realisiert werden, bei welchen es sich um die Heckscheinwerfer des Kraftfahrzeugs 100 oder um sonstige Kraftfahrzeugscheinwerfer 90 handelt.

In den oben beschriebenen sieben Ausführungsbeispielen ist den in den Vorsatzgehäusen 30 angeordneten lichtleitenden Elementen 20 jeweils eine Tagfahrlichtfunktion zugeordnet. Es können allerdings auch erfindungsgemäße Kraftfahrzeuge 100 mit erfindungsgemäßen Kraftfahrzeugscheinwerfern 90 realisiert werden, bei welchen den in den Vorsatzgehäusen 30 angeordneten lichtleitenden Elementen 20 jeweils eine Blinklichtfunktion, eine Kurvenlichtfunktion, eine Abblendlichtfunktion, eine Fernlichtfunktion, eine Nebellichtfunktion, eine Nebelschlusslichtfunktion, eine Rückfahrlichtfunktion, eine Sidemarker-Lichtfunktion, eine Positionslichtfunktion, eine Schlusslichtfunktion, eine Standlichtfunktion und/oder eine sonstige Lichtfunktion zugeordnet ist.

### Bezugszeichenliste

- 3: Einkoppelseite
- 4: Umlenkoptik
- 4': Prisma
- 5: Auskoppelseite
- 8: Vorsprung
- 10: Kollimator-Optik
- 11: Auskoppelfläche
- 15: Lichtscheibe
- 15': weitere Lichtscheibe
- 20: lichtleitendes Element
- 20': länglicher Lichtleiter
- 30: Vorsatzgehäuse
- 39: Außenseite der Außenlichtscheibe
- 40: Außenlichtscheibe
- 41: Innenseite der Außenlichtscheibe
- 50: Kühlkörper
- 60: Leuchtmittel
- 80: Gehäuse
- 90: Kraftfahrzeugscheinwerfer
- 93: Kühlergrill-Lamelle
- 95: Kühlergrill
- 99: Licht
- 100: Kraftfahrzeug
- 110: Klippverbindung
- 120: Klippelement
- 130: Aufnahmeabschnitt
- 140: Rückseite
- 150: Formelement
- 160: äußere Wandung
- 170: innere Wandung

## Patentansprüche

1. Kraftfahrzeugscheinwerfer (90), umfassend
- ein Gehäuse (80), in welchem mindestens eine Hauptlichtquelle (70) angeordnet ist;
- mindestens ein weiteres Leuchtmittel (60);
- einen Kühlkörper (50) zur Kühlung des Leuchtmittels (60);
- eine zumindest teilweise transparente Außenlichtscheibe (40), welche das Gehäuse (80) zu der äußeren Umgebung des Kraftfahrzeugscheinwerfers (90) hin abschließt und eine dem Inneren des Gehäuses (80) zugewandte Innenseite (41) und eine der äußeren Umgebung zugewandte Außenseite (39) aufweist;
- ein Vorsatzgehäuse (30), welches vor der Außenseite (39) der Außenlichtscheibe (40) angeordnet ist, und
- in oder an dem Vorsatzgehäuse (30) ein lichtleitendes Element (20) angeordnet ist, welches den Innenraum des Vorsatzgehäuses (30) zumindest teilweise ausfüllt oder zumindest einen Teil einer Wand des Vorsatzgehäuses (30) bildet, und welches dazu ausgebildet ist, mittels des mindestens einen Leuchtmittels (60) eingestrahltes Licht (99) zu leiten.
, **dadurch gekennzeichnet, dass**
das Vorsatzgehäuse (30) mit dem Gehäuse (80) des Kraftfahrzeugscheinwerfers (90) durch ein oder mehrere Befestigungselemente zerstörungsfrei lösbar verbunden ist.

2. Kraftfahrzeugscheinwerfer nach Anspruch 1, **dadurch gekennzeichnet, dass** das lichtleitende Element (20) als länglicher Lichtleiter (20') ausgeführt ist, welcher den Innenraum des Vorsatzgehäuses (30) zumindest teilweise ausfüllt.

3. Kraftfahrzeugscheinwerfer nach einem der vorhergehenden Ansprüche, **dadurch gekennzeichnet, dass** eine Kollimator-Optik (10) vor dem mindestens einen Leuchtmittel (60) angeordnet ist, welche das von dem mindestens einen Leuchtmittel (60) emittierte Licht (99) zu bündeln vermag.

4. Kraftfahrzeugscheinwerfer nach Anspruch 3, **dadurch gekennzeichnet, dass** die Kollimator-Optik (10) zumindest teilweise innerhalb des Gehäuses (80) angeordnet ist.

5. Kraftfahrzeugscheinwerfer nach einem der Ansprüche 1 bis 4, **dadurch gekennzeichnet, dass** das mindestens eine weitere Leuchtmittel (60) und der Kühlkörper (50) in dem Gehäuse (80) angeordnet sind.

6. Kraftfahrzeugscheinwerfer nach Anspruch 2 bis 5, **dadurch gekennzeichnet, dass** zumindest ein Bereich der der Außenlichtscheibe (40) zugewandten Wand des Vorsatzgehäuses (30) als Lichtscheibe (15) ausgeführt ist, durch welche das mindestens eine weitere Leuchtmittel (60) Licht (99) in das Vorsatzgehäuse (30) einzustrahlen vermag und hinter welchem innenseitig eine Umlenkoptik (4) innerhalb des Vorsatzgehäuses (30) angeordnet ist, mittels welcher eingestrahltes Licht (99) in den länglichen Lichtleiter (20') umgelenkt wird.

7. Kraftfahrzeugscheinwerfer nach Anspruch 6, **dadurch gekennzeichnet, dass** die Lichtscheibe (15), die Umlenkoptik (4) und/oder der längliche Lichtleiter (20') als ein zusammenhängendes, gemeinsames Bauteil ausgeführt sind.

8. Kraftfahrzeugscheinwerfer nach Anspruch 2 bis 5, **dadurch gekennzeichnet, dass** die Umlenkoptik (4) eine Einkoppelseite (3) und eine Auskoppelseite (5) aufweist, wobei die Einkoppelseite (3) aus einem Teil der Außenlichtscheibe (40) gebildet ist und die Umlenkoptik (4) durch eine in einer Wand des Vorsatzgehäuses (30) gebildete Öffnung hindurch in das Vorsatzgehäuse (30) hineinragt, wobei zumindest ein Teil der Auskoppelseite (5) der Umlenkoptik (4) innerhalb des Vorsatzgehäuses (30) und vor einer Lichteinkoppelstelle des länglichen Lichtleiters (20') angeordnet ist.

9. Kraftfahrzeugscheinwerfer nach Anspruch 8, **dadurch gekennzeichnet, dass** die Kollimator-Optik (10) eine Auskoppelfläche (11) aufweist, welche zumindest teilweise mit der Einkoppelseite (3) der Umlenkoptik (4) zusammenfällt und die Kollimator-Optik (10), die Außenlichtscheibe (40) und die Umlenkoptik (4) als ein gemeinsames, zusammenhängendes Bauteil ausgebildet sind.

10. Kraftfahrzeugscheinwerfer nach Anspruch 2 bis 5, **dadurch gekennzeichnet, dass** die Außenlichtscheibe (40) einen sich in Richtung der äußeren Umgebung erstreckenden Vorsprung (8) aufweist, welcher durch eine in einer Wand des Vorsatzgehäuses (30) gebildete Öffnung hindurch in das Vorsatzgehäuse (30) hineinragt, wobei das Leuchtmittel (60) samt der vor diesem angeordneten Kollimator-Optik (10) in dem Vorsprung (8) angeordnet ist und Licht (99) in den länglichen Lichtleiter (20') einzukoppeln vermag.

11. Kraftfahrzeugscheinwerfer nach Anspruch 2 bis 5, **dadurch gekennzeichnet, dass** die Kollimator-Optik (10) eine Auskoppelfläche (11) aufweist und einteilig mit der Außenlichtscheibe (40) gefertigt ist, wobei die Auskoppelfläche (11) der Kollimator-Optik (10) durch einen Teil der Außenlichtscheibe (40) gebildet ist oder die Auskoppelfläche (40) der Kollimator-Optik (10) außerhalb des Gehäuses (80) zwischen der Außenseite (39) der Außenlichtscheibe (40) und einer Wand des Vorsatzgehäuses (30) angeordnet ist.

12. Kraftfahrzeugscheinwerfer nach einem der Ansprüche 6 bis 9, **dadurch gekennzeichnet, dass** die Umlenkeinheit (4) als Prisma (4') und/oder als eine Spiegelanordnung (4") ausgeführt ist.

13. Kraftfahrzeugscheinwerfer nach einem der Ansprüche 1 bis 3, **dadurch gekennzeichnet, dass** das mindestens eine weitere Leuchtmittel (60) und der Kühlkörper (50) in oder an dem Vorsatzgehäuse (30) angeordnet sind.

14. Kraftfahrzeugscheinwerfer nach Anspruch 13, **dadurch gekennzeichnet, dass** das mindestens eine weitere Leuchtmittel (60) und der Kühlkörper (50) an einer der Außenlichtscheibe (40) zugewandten Rückseite (140) des Vorsatzgehäuses angeordnet sind.

15. Kraftfahrzeugscheinwerfer nach Anspruch 3 und einem der Ansprüche 16 bis 17, **dadurch gekennzeichnet, dass** die Kollimator-Optik (10) zumindest teilweise innerhalb des Vorsatzgehäuses (30) angeordnet ist.

16. Kraftfahrzeugscheinwerfer nach einem der Ansprüche 13 bis 15, **dadurch gekennzeichnet, dass** sich das mindestens eine weitere Leuchtmittel (60) und/oder der Kühlkörper (50) zumindest teilweise in das Vorsatzgehäuse (30) hinein erstrecken.

17. Kraftfahrzeugscheinwerfer nach einem der vorhergehenden Ansprüche, **dadurch gekennzeichnet, dass** sich das Vorsatzgehäuse (30) spangenförmig über zumindest einen Teil der Außenlichtscheibe (40) erstreckt.

18. Kraftfahrzeugscheinwerfer nach einem der vorhergehenden Ansprüche, **dadurch gekennzeichnet, dass** die Außenlichtscheibe (40) mit dem Gehäuse (80) stoffschlüssig verbunden ist.

19. Kraftfahrzeugscheinwerfer nach einem der vorhergehenden Ansprüche, **dadurch gekennzeichnet, dass** das Vorsatzgehäuse (30) mit dem Gehäuse (80) des Kraftfahrzeugscheinwerfers (90) über eine Klippverbindung verbunden ist.

20. Kraftfahrzeug (100), **dadurch gekennzeichnet, dass** das Kraftfahrzeug (100) einen Kraftfahrzeugscheinwerfer (90) nach einem der vorhergehenden Ansprüche sowie einen Kühlergrill (95) mit mindestens einer Kühlergrill-Lamelle (93) aufweist, wobei das Vorsatzgehäuse (30) optisch eine Verlängerung der mindestens einen Kühlergrill-Lamelle (93) bildet.

## Claims

1. Motor vehicle headlamp (90) comprising
- a housing (80) in which at least one main light source (70) is arranged;
- at least one further lighting means (60);
- a heat sink (50) for cooling the lighting means (60) ;
- at least one partially transparent cover lens (40) which closes off the housing (80) from the external surroundings of the motor vehicle headlamp (90), and an inner side (41) which faces the interior of the housing (80) and has an outer side (39) which faces the external surroundings;
- an add-on housing (30) which is arranged in front of the outer side (39) of the cover lens (40), and
- a light-guiding element (20) which is arranged in or on the add-on housing (30) and which at least partially fills the interior of the add-on housing (30) or forms at least part of a wall of the add-on housing (30) and is designed to guide light (99) which is input by means of the at least one lighting means (60),
**characterized in that**
the add-on housing (30) is connected to the housing (80) of the motor vehicle headlamp (90) by means of one more attachment elements in such a way that it can be released without destruction.

2. Motor vehicle headlamp according to Claim 1, **characterized in that** the light-guiding element (20) is embodied as an elongate light guide (20') which at least partially fills the interior of the add-on housing (30).

3. Motor vehicle headlamp according to one of the preceding claims, **characterized in that** a collimator optical device (10) is arranged in front of the at least one lighting means (60), which collimator optical device (10) is capable of focusing the light (99) which is emitted by the at least one lighting means (60).

4. Motor vehicle headlamp according to Claim 3, **characterized in that** the collimator optical device (10) is arranged at least partially within the housing (80).

5. Motor vehicle headlamp according to one of Claims 1 to 4, **characterized in that** the at least one further lighting means (60) and the heat sink (50) are arranged in the housing (80).

6. Motor vehicle headlamp according to Claims 2 to 5, **characterized in that** at least one region of the wall, facing the cover lens (40), of the add-on housing (30) is embodied as a lens (15) through which the at least one further lighting means (60) is capable of inputting light (99) into the add-on housing (30) and behind which a deflection optical device (4) is arranged on the inside within the add-on housing (30), by means of which deflection optical device (4) input light (99) is deflected into the elongate light guide (20').

7. Motor vehicle headlamp according to Claim 6, **characterized in that** the lens (15), the deflection optical device (4) and/or the elongate light guide (20') are embodied as a coherent common component.

8. Motor vehicle headlamp according to Claims 2 to 5, **characterized in that** the deflection optical device (4) has an input side (3) and an output side (5), wherein the input side (3) is formed from part of the cover lens (40), and the deflection optical device (4) projects into the add-on housing (30) through an opening formed in a wall of the add-on housing (30), wherein at least part of the output side (5) of the deflection optical device (4) is arranged within the add-on housing (30) and in front of a light input point of the elongate light guide (20').

9. Motor vehicle headlamp according to Claim 8, **characterized in that** the collimator optical device (10) has an output face (11) which coincides at least partially with the input side (3) of the deflection optical device (4), and the collimator optical device (10), the cover lens (40) and the deflection optical device (4) are embodied as a common, coherent component.

10. Motor vehicle headlamp according to Claims 2 to 5, **characterized in that** the cover lens (40) has a projection (8) which extends in the direction of the external surroundings and which projects into the add-on housing (30) through an opening formed in a wall of the add-on housing (30), wherein the lighting means (60) is arranged, together with the collimator optical device (10) arranged in front of the latter, in the projection (8), and is capable of inputting light (99) into the elongate light guide (20').

11. Motor vehicle headlamp according to Claims 2 to 5, **characterized in that** the collimator optical device (10) has an output face (11) and is fabricated in one piece with the cover lens (40), wherein the output face (11) of the collimator optical device (10) is formed by part of the cover lens (40), or the output face (40) of the collimator optical device (10) is arranged outside the housing (80), between the outer side (39) of the cover lens (40) and a wall of the add-on housing (30).

12. Motor vehicle headlamp according to one of Claims 6 to 9, **characterized in that** the deflection unit (4) is embodied as a prism (4') and/or as a mirror arrangement 4").

13. Motor vehicle headlamp according to one of Claims 1 to 3, **characterized in that** the at least further lighting means (60) and the heat sink (4) are arranged in or on the add-on housing (30).

14. Motor vehicle headlamp according to Claim 13, **characterized in that** the at least one further lighting means (60) and the heat sink (50) are arranged on a rear side (140), facing the cover lens (40), of the add-on housing.

15. Motor vehicle headlamp according to Claim 3 and one of Claims 16 to 17, **characterized in that** the collimator optical device (10) is arranged at least partly within the add-on housing (30).

16. Motor vehicle headlamp according to one of Claims 13 to 15, **characterized in that** the at least one further lighting means (60) and/or the heat sink (50) extends at least partially into the add-on housing (30).

17. Motor vehicle headlamp according to one of the preceding claims, **characterized in that** the add-on housing (30) extends in the form of a clasp over at least part of the cover lens (40).

18. Motor vehicle headlamp according to one of the preceding claims, **characterized in that** the cover lens (40) is connected in a materially joined fashion to the housing (80).

19. Motor vehicle headlamp according to one of the preceding claims, **characterized in that** the add-on housing (30) is connected to the housing (80) of the motor vehicle headlamp (90) by means of a clip connection.

20. Motor vehicle (100), **characterized in that** the motor vehicle (100) has a motor vehicle headlamp (90) according to one of the preceding claims and a radiator grille (95) with at least one radiator grille lamella (93), wherein the add-on housing (30) visually forms an extension of the at least one radiator grille lamella (93).

## Revendications

1. Phare de véhicule automobile (90), comprenant
- un boîtier (80) dans lequel est disposée au moins une source de lumière principale (70) ;
- au moins un moyen lumineux (60) supplémentaire ;
- un dissipateur de chaleur (50) destiné à refroidir le moyen lumineux (60) ;
- une vitre de diffusion extérieure (40) au moins partiellement transparente, laquelle ferme le boîtier (80) par rapport à l'environnement extérieur du phare de véhicule automobile (90) et possède un côté intérieur (41) qui fait face à l'intérieur du boîtier (80) et un côté extérieur (39) qui fait face à l'environnement extérieur ;
- un boîtier additionnel (30), lequel est disposé devant le côté extérieur (39) de la vitre de diffusion extérieure (40), et
- un élément conducteur de lumière (20) qui est disposé dans ou sur le boîtier additionnel (30), lequel remplit au moins partiellement l'espace intérieur du boîtier additionnel (30) ou forme au moins une partie d'une paroi du boîtier additionnel (30), et lequel est en outre configuré pour guider de la lumière (99) injectée au moyen de l'au moins un moyen lumineux (60),
**caractérisé en ce que**
le boîtier additionnel (30) est relié de manière amovible non destructrice au boîtier (80) du phare de véhicule automobile (90) par un ou plusieurs éléments de fixation.

2. Phare de véhicule automobile selon la revendication 1, **caractérisé en ce que** l'élément conducteur de lumière (20) est réalisé sous la forme d'un conducteur optique allongé (20') qui remplit au moins partiellement l'espace intérieur du boîtier additionnel (30) .

3. Phare de véhicule automobile selon l'une des revendications précédentes, **caractérisé en ce qu'**une optique de collimation (10) est disposée devant l'au moins un moyen lumineux (60), laquelle a la capacité de focaliser la lumière (99) émise par l'au moins un moyen lumineux (60).

4. Phare de véhicule automobile selon la revendication 3, **caractérisé en ce que** l'optique de collimation (10) est au moins partiellement disposée à l'intérieur du boîtier (80).

5. Phare de véhicule automobile selon l'une des revendications 1 à 4, **caractérisé en ce que** l'au moins un moyen lumineux (60) supplémentaire et le dissipateur de chaleur (50) sont disposés dans le boîtier (80).

6. Phare de véhicule automobile selon les revendications 2 à 5, **caractérisé en ce qu'**au moins une zone de la paroi du boîtier additionnel (30) qui fait face à la vitre de diffusion extérieure (40) est réalisée sous la forme d'une vitre de diffusion (15) à travers laquelle l'au moins un moyen lumineux (60) supplémentaire a la capacité d'injecter de la lumière (99) dans le boîtier additionnel (30) et derrière laquelle une optique de déviation (4) est disposée, du côté intérieur, à l'intérieur du boîtier additionnel (30), au moyen de laquelle de la lumière (99) injectée est déviée dans le conducteur optique allongé (20').

7. Phare de véhicule automobile selon la revendication 6, **caractérisé en ce que** la vitre de diffusion (15), l'optique de déviation (4) et/ou le conducteur optique allongé (20') sont réalisés sous la forme d'un élément structural commun cohérent.

8. Phare de véhicule automobile selon les revendications 2 à 5, **caractérisé en ce que** l'optique de déviation (4) possède un côté de couplage d'entrée (3) et un côté de couplage de sortie (5), le côté de couplage d'entrée (3) étant formé d'une partie de la vitre de diffusion extérieure (40) et l'optique de déviation (4) faisant saillie dans le boîtier additionnel (30) à travers une ouverture formée dans une paroi du boîtier additionnel (30), au moins une partie du côté de couplage de sortie (5) de l'optique de déviation (4) étant disposée à l'intérieur du boîtier additionnel (30) et devant un point de couplage d'entrée de la lumière du conducteur optique allongé (20').

9. Phare de véhicule automobile selon la revendication 8, **caractérisé en ce que** l'optique de collimation (10) possède une surface de couplage de sortie (11) qui coïncide au moins partiellement avec le côté de couplage d'entrée (3) de l'optique de déviation (4) et l'optique de collimation (10), la vitre de diffusion extérieure (40) et l'optique de déviation (4) sont réalisées sous la forme d'un élément structural commun cohérent.

10. Phare de véhicule automobile selon les revendications 2 à 5, **caractérisé en ce que** la vitre de diffusion extérieure (40) possède une partie saillante (8) qui s'étend en direction de l'environnement extérieur, laquelle fait saillie dans le boîtier additionnel (30) à travers une ouverture formée dans une paroi du boîtier additionnel (30), le moyen lumineux (60) avec l'optique de collimation (10) disposée devant celui-ci étant disposé dans la partie saillante (8) et ayant la capacité d'injecter de la lumière (99) dans le conducteur optique allongé (20').

11. Phare de véhicule automobile selon les revendications 2 à 5, **caractérisé en ce que** l'optique de collimation (10) possède une surface de couplage de sortie (11) et est fabriquée d'un seul tenant avec la vitre de diffusion extérieure (40), la surface de couplage de sortie (11) de l'optique de collimation (10) étant formée par une partie de la vitre de diffusion extérieure (40) ou la surface de couplage de sortie (40) de l'optique de collimation (10) étant disposée en-dehors du boîtier (80) entre le côté extérieur (39) de la vitre de diffusion extérieure (40) et une paroi du boîtier additionnel (30).

12. Phare de véhicule automobile selon l'une des revendications 6 à 9, **caractérisé en ce que** l'unité de déviation (4) est réalisée sous la forme d'un prisme (4') et/ou d'un arrangement de miroirs (4").

13. Phare de véhicule automobile selon l'une des revendications 1 à 3, **caractérisé en ce que** l'au moins un moyen lumineux (60) supplémentaire et le dissipateur de chaleur (50) sont disposés dans ou sur le boîtier additionnel (30).

14. Phare de véhicule automobile selon la revendication 13, **caractérisé en ce que** l'au moins un moyen lumineux (60) supplémentaire et le dissipateur de chaleur (50) sont disposés sur un côté arrière (140) du boîtier additionnel qui fait face à la vitre de diffusion extérieure (40).

15. Phare de véhicule automobile selon la revendication 3 et l'une des revendications 16 et 17, **caractérisé en ce que** l'optique de collimation (10) est disposée au moins partiellement à l'intérieur du boîtier additionnel (30).

16. Phare de véhicule automobile selon l'une des revendications 13 à 15, **caractérisé en ce que** l'au moins un moyen lumineux (60) supplémentaire et/ou le dissipateur de chaleur (50) s'étendent au moins partiellement à l'intérieur du boîtier additionnel (30).

17. Phare de véhicule automobile selon l'une des revendications précédentes, **caractérisé en ce que** le boîtier additionnel (30) s'étend en forme de boucle sur au moins une partie de la vitre de diffusion extérieure (40) .

18. Phare de véhicule automobile selon l'une des revendications précédentes, **caractérisé en ce que** la vitre de diffusion extérieure (40) est assemblée avec le boîtier (80) par fusion de matières.

19. Phare de véhicule automobile selon l'une des revendications précédentes, **caractérisé en ce que** le boîtier additionnel (30) est assemblé avec le boîtier (80) du phare de véhicule automobile (90) par le biais d'une liaison par agrafe.

20. Véhicule automobile (100), **caractérisé en ce que** le véhicule automobile (100) possède un phare de véhicule automobile (90) selon l'une des revendications précédentes ainsi qu'une calandre (95) comprenant au moins une lamelle de calandre (93), le boîtier additionnel (30) formant optiquement une prolongation de l'au moins une lamelle de calandre (93).
